# EUROPEAN PATENT APPLICATION

(11) **EP 2 508 960 A2**
(43) Date of publication of application: **10.10.2012**
(21) Application number: 12156824.0
(22) Date of filing: 24.02.2012
(51) Int. Cl.: G06F 1/16, G06F 3/033, G06F 3/041, G06F 3/01

(54) **Gesture recognition on a portable device with force-sensitive housing**

(30) Priority: 06.04.2011 WO PCT/CA2011/050186
(71) Applicant: Research In Motion Limited, Waterloo, ON N2L 3W8 (CA)
(72) Inventor: Griffin, Jason, Tyler, Waterloo, Ontario N2L 3W8 (CA)
(74) Representative: MERH-IP Matias Erny Reichl Hoffmann

(57) **Abstract**

The present disclosure provides a portable electronic device having gesture recognition and a method for controlling the same. In accordance with one example embodiment, the method comprises sensing a distortion of the portable electronic device, determining an action associated with a sensed distortion, and therefore causing the determined action to be performed.

## Description

### TECHNICAL FIELD

The present disclosure relates to portable electronic devices, and more particularly to a portable electronic device having gesture recognition and a method for controlling the same.

### BACKGROUND

Electronic devices, including portable electronic devices, are increasingly being configured for gestural control as part of a movement towards ubiquitous computing in which devices are adapted for more natural and intuitive user interaction instead of requiring the user to adapt to electronic devices. The majority of gestural controls are in the form of touch gestures detected with a touch-sensitive display or motion gestures detected with a motion sensor such as an accelerometer. Alternative forms of gestural control are desirable to provide a more natural and intuitive user interaction with an electronic device.

### BRIEF DESCRIPTION OF THE DRAWINGS

FIG. 1 is a simplified block diagram of components including internal components of a first example of a portable electronic device suitable for carrying out the example embodiments of the present disclosure;

FIG. 2 is a front view of an example of a portable electronic device suitable for carrying out the example embodiments of the present disclosure;

FIG. 3 is a simplified block diagram of a gesture detection subsystem in accordance with the present disclosure;

FIG. 4A is a sectional plan view of the portable electronic device of FIG. 2 showing the location of the sensors;

FIG. 4B is a sectional side view of the portable electronic device of FIG. 2 showing the location of the sensors;

FIG. 5 is a sectional view of an example pressure sensor arrangement for the portable electronic device of FIG. 2 in accordance with the present disclosure;

FIG. 6 is a sectional view of another example pressure sensor arrangement for the portable electronic device of FIG. 2 in accordance with the present disclosure;

FIG. 7 is a sectional plan view of an example magnetic sensor arrangement for a portable electronic device with a flexible skin, with the flexible skin in a neutral state;

FIG. 8 is a sectional plan view of an example magnetic sensor arrangement for a portable electronic device with a flexible skin, with the flexible skin in an actuated state;

FIG. 9 is a flowchart illustrating a method for gesture recognition in accordance with one example embodiment of the present disclosure;

FIGs. 10A to 10I are diagrammatic representations of force gestures which can be sensed by example embodiments of the present disclosure;

FIG. 11 is a flowchart of a method of zooming a user interface in accordance with one example embodiment of the present disclosure;

FIG. 12 is a flowchart of a method of navigating a document in accordance with one example embodiment of the present disclosure;

FIG. 13 is a flowchart of a method of navigating a calendar in accordance with one example embodiment of the present disclosure;

FIG. 14 is a flowchart of a method of navigating media in accordance with one example embodiment of the present disclosure;

FIG. 15 is a flowchart of a method of controlling a vehicle simulator in accordance with one example embodiment of the present disclosure; and

FIG. 16 is a flowchart illustrating a method of providing security on the portable electronic device in accordance with one example embodiment of the present disclosure.

### DETAILED DESCRIPTION OF EXAMPLE EMBODIMENTS

Reference will now be made to the accompanying drawings which show, by way of example, example embodiments of the present disclosure. For simplicity and clarity of illustration, reference numerals may be repeated among the Figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the example embodiments described herein. Any reference to direction or orientation herein is for convenience and is not intended to be limiting unless explicitly stated herein.

The disclosure generally relates to a portable electronic device such as a handheld electronic device. Examples of handheld electronic devices include wireless communication devices such as, for example, pagers, mobile telephones, smartphones, tablet computing devices, wireless organizers, personal digital assistants (PDAs), and so forth. The portable electronic device may also be a handheld electronic device with or without wireless communication capabilities such as, for example, an electronic gaming device, digital photograph album, digital camera, or other device.

The present disclosure provides a solution which augments traditional input devices of portable electronic devices, such as keyboards, keypads and touchscreens, with inputs provided by force gestures caused by stretching, compressing, bending, twisting and/or folding forces applied the portable electronic device. Sensors are used to detect the distortion of a housing of the portable electronic device caused by stretching, compressing, bending, twisting and/or folding forces. The proposed solution offers a relatively inexpensive and simple solution for providing inputs which may be used to supplement or replace inputs from traditional input devices.

In accordance with one example embodiment, there is provided a method for controlling a portable electronic device, comprising: sensing distortion of the portable electronic device; determining an action associated with a sensed distortion; and causing the determined action to be performed. In some examples, the determining comprises: determining a force gesture associated with the sensed distortion; determining the action associated with the determined force gesture. In some examples, the action is determined in accordance with the determined force gesture and at least one of a touch input, device orientation or motion gesture. In some examples, the touch input is a touch location or a touch gesture. In some examples, the sensed distortion is a distortion of a substantially rigid housing of the portable electronic device. In some examples, the sensing comprises sensing forces applied to the housing. In some examples, the sensed distortion is a distortion of a flexible skin which surrounds a substantially rigid housing of the portable electronic device. In some examples, the sensing comprises sensing forces applied to the flexible skin.

In accordance with another example embodiment, there is provided a method of gesture recognition on a portable electronic device, comprising: displaying a user interface screen; sensing distortion of the portable electronic device; determining whether a sensed distortion matches a first force gesture or second force gesture; when the first force gesture is detected, causing a first change in the content of the user interface screen; when the second force gesture is detected, causing a second change in the content of the user interface screen.

In accordance with a further example embodiment, there is provided a portable electronic device, comprising: sensing distortion of the portable electronic device; determining whether a sensed distortion matches a first force gesture or second force gesture; when a clockwise folding gesture is detected, reproducing content of a next data object in a datastore of a media player application; and when a counter-clockwise folding gesture is detected, reproducing content of a previous next data object in a datastore of the media player application.

In accordance with yet a further example embodiment, there is provided a method of gesture recognition on a portable electronic device, comprising: displaying a user interface screen including a content area in which content is displayed, the content including a vehicle in an environment; sensing distortion of the portable electronic device; determining whether a sensed distortion matches a first force gesture or second force gesture; when the first force gesture is detected, increasing a value of a speed parameter of the vehicle simulator, rendering a new scene including the vehicle and the environment using the new value of the speed parameter, and displaying the rendered new scene; when the second force gesture is detected, decreasing a value of a speed parameter of the vehicle simulator, rendering a new scene including the vehicle and the environment using the new value of the speed parameter, and displaying the rendered new scene.

In accordance with yet a further example embodiment, there is provided a method of gesture recognition on a portable electronic device, comprising: sensing distortion of the portable electronic device from a neutral mode; determining a force gesture associated with the sensed distortion; monitoring, when the portable electronic device is in a secure mode, for a designated input for terminating the secure mode, wherein the designated input for terminating the secure mode comprises a first force gesture or first sequence of force gestures; and terminating the secure mode when the first force gesture or first sequence of force gestures is detected. In some examples, the method further comprises: monitoring, when the portable electronic device is not in a secure mode, for a trigger condition for initiating the secure mode; and initiating a secure mode on the device in response to detection of a trigger condition. In some examples, the trigger condition is a second force gesture or second sequence of force gestures. In some examples, the method further comprises deactivating a display of the portable electronic device when initiating the secure mode. In some examples, the method further comprises reactivating a display of the portable electronic device when terminating the secure mode. In some examples, the method further comprises: reactivating the display in response to detection of any input when the portable electronic device is in the secure mode, and displaying a prompt on the display for designated input for terminating the secure mode.

In some examples, the method comprises adding a distinct input value associated with each identified force gesture to an input buffer to form a series of input values; comparing the series of input values in the input buffer to a series of values corresponding to a predetermined force gesture passcode sequence; and unlocking the device when the series of input values in the input buffer match the series of values corresponding to the predetermined force gesture passcode sequence. In some examples, the series of input values in the input buffer is compared the series of values corresponding to the predetermined force gesture passcode sequence in response to each detected force gesture. In some examples, the series of input values in the input buffer is compared the series of values corresponding to a predetermined force gesture passcode sequence when a number of the input values in the input buffer matches a number of the input values in the predetermined force gesture passcode sequence. In some examples, the method comprises adding an input value associated with unidentified force gestures to the input buffer for each unidentified force gesture detected. In some examples, the input value associated with unidentified force gestures is a distinct input value associated with all unidentified force gestures.

In accordance with yet a further example embodiment, there is provided a portable electronic device, comprising: a substantially rigid housing containing a processor, a sensor coupled to the processor, the sensor sensing distortion of the portable electronic device; the processor configured for performing the method(s) set forth herein.

In some examples, the portable electronic device further comprises: a flexible skin surrounding the housing, the flexible skin carrying a magnet; wherein the sensor comprises a magnetic sensor coupled to the processor which monitors a magnetic field generated by the magnet in the flexible skin. In some examples, the flexible skin is resiliently compressible so that it is locally compresses from a neutral state to an actuated state in response to a compressive force, and returns from the actuated state to the neutral state when the compressive force is removed, the magnet being embedded in the flexible skin so as to move in response to changes between the neutral state and the actuated state.

In other examples, the sensor comprises a first sensing layer located within the housing along a first side thereof, the first sensing layer including a pressure sensing layer providing pressure input to the processor. In some examples, the first sensing layer further includes a position sensing layer extending longitudinally along the first side providing position input to the processor. The position input identifies a location of any portion of the first sensing layer engaged by direct or indirect contact. The position sensing layer may be located between the first side and the pressure sensing layer. The pressure sensing layer may comprise a point pressure sensor and an elongate pressure distribution strip disposed between the point pressure sensor and the first side.

In accordance with a further embodiment of the present disclosure, there is provided a computer program product comprising a computer readable medium having stored thereon computer program instructions for implementing a method on an electronic device, the computer executable instructions comprising instructions for performing the method(s) set forth herein.

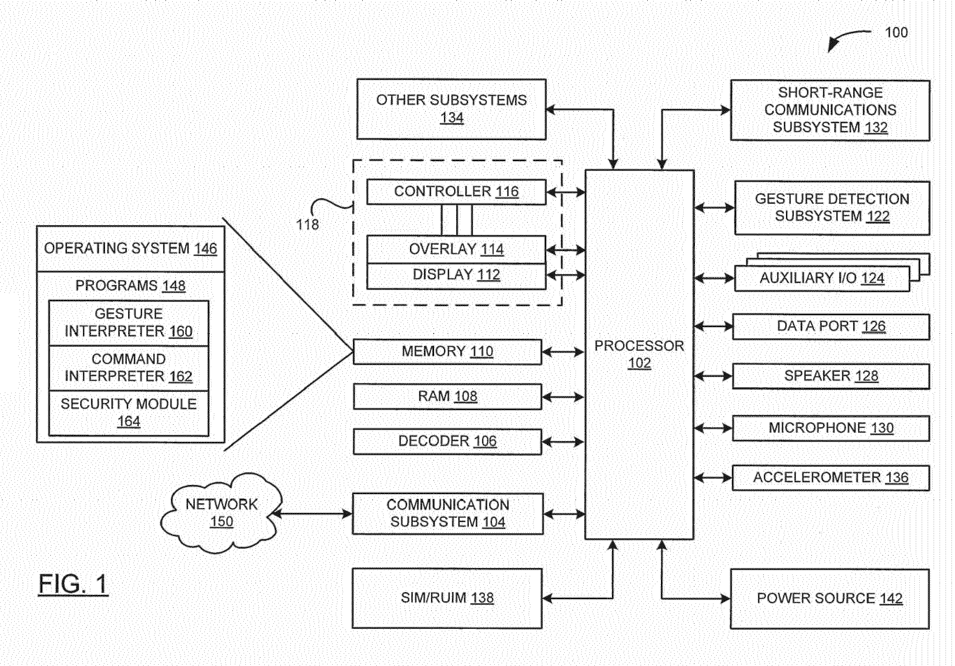

Reference is made to FIG. 1, which illustrates in block diagram form, a portable electronic device 100 to which example embodiments described in the present disclosure can be applied. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, gesture detection subsystem 122, an auxiliary input/output (I/O) subsystem 124, a data port 126, a speaker 128, a microphone 130, short-range communications 132, other device subsystems 134, and an accelerometer 136.

User-interaction with a graphical user interface (GUI) is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor, such as the accelerometer 136, to detect direction of gravitational forces or gravity-induced reaction forces so as to determine, for example, the orientation of the portable electronic device 1 00.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software applications 148 that are executed by the processor 102 and are typically stored in a persistent, updatable store such as the memory 110. Additional applications 148 may be loaded onto the portable electronic device 100 through the wireless network 150, the auxiliary I/O subsystem 124, the data port 126, the short-range communications subsystem 132, or any other suitable subsystem 134.

The applications 148 include a gesture interpreter 160 for recognizing force gestures, a command interpreter 162 for determining an action associated with a force gesture, and a security module 164. The gesture interpreter 160 and command interpreter 162 may be separate components or may be combined. The security module 164 provides security services for the portable electronic device 100 including lock and unlock processes examples of which are known in the art. The security module 164 monitors for and detects trigger conditions for initiating a secure mode on the portable electronic device 100 when it is in not in a secure mode, and monitors for and detects designated input for terminating the secure mode when it is in a secure mode. The security module 164 may be a separate application or may be part of the operating system 146. The applications 148 may also include a Web browser, mapping or navigation application, media player, calendar, document viewer, games or any combination thereof. The games may include, for example, a vehicle simulator such as a driving simulator (or video game) or flight simulator (or video game).

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example embodiment, the touch-sensitive display 118 is a capacitive touch-sensitive display which includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 112 of the touch-sensitive display 118 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch inputs, touch contacts or touch events, may be detected by the touch-sensitive display 118. The processor 102 may determine attributes of the touch, including a location of a touch. Touch location data may include an area of contact or a single point of contact, such as a point at or near a center of the area of contact known as the centroid. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The location of the touch moves as the detected object moves during a touch. The controller 116 and/or the processor 102 may detect a touch by any suitable contact member on the touch-sensitive display 118. Similarly, multiple simultaneous touches, are detected.

The touch-sensitive overlay 114 is configured to detect one or more touch gestures. Alternatively, the processor 102 may be configured to detect one or more touch gestures in accordance with touch data provided by the touch-sensitive overlay 114. A touch gesture is a particular type of touch on a touch-sensitive display 118 that begins at an origin point and continues to an end point. A touch gesture may be identified by attributes of the touch gesture, including the origin point, the end point, the distance travelled, the duration, the velocity, and the direction, for example. A touch gesture may be long or short in distance and/or duration. Two points of the touch gesture may be utilized to determine a direction of the touch gesture.

An example of a touch gesture is a swipe (also known as a flick). A swipe has a single direction. The touch-sensitive overlay 114 may evaluate swipes with respect to the origin point at which contact is initially made with the touch-sensitive overlay 114 and the end point at which contact with the touch-sensitive overlay 114 ends rather than using each of location or point of contact over the duration of the touch gesture to resolve a direction.

Examples of swipes include a horizontal swipe, a vertical swipe, and a diagonal swipe. A horizontal swipe typically comprises an origin point towards the left or right side of the touch-sensitive overlay 114 to initialize the touch gesture, a horizontal movement of the detected object from the origin point to an end point towards the right or left side of the touch-sensitive overlay 114 while maintaining continuous contact with the touch-sensitive overlay 114, and a breaking of contact with the touch-sensitive overlay 114. Similarly, a vertical swipe typically comprises an origin point towards the top or bottom of the touch-sensitive overlay 114 to initialize the touch gesture, a horizontal movement of the detected object from the origin point to an end point towards the bottom or top of the touch-sensitive overlay 114 while maintaining continuous contact with the touch-sensitive overlay 114, and a breaking of contact with the touch-sensitive overlay 114.

Swipes can be of various lengths, can be initiated in various places on the touch-sensitive overlay 114, and need not span the full dimension of the touch-sensitive overlay 114. In addition, breaking contact of a swipe can be gradual in that contact with the touch-sensitive overlay 114 is gradually reduced while the swipe is still underway.

Meta-navigation touch gestures may also be detected by the touch-sensitive display 118. A meta-navigation touch gesture is a touch gesture that has an origin point that is outside the display area of the touch-sensitive display 118 and that moves to a position on the display area of the touch-sensitive display 118. Other attributes of the touch gesture may be detected and be utilized to detect the meta-navigation touch gesture. Meta-navigation touch gestures may also include multi-touch touch gestures in which touch gestures are simultaneous or overlap in time and at least one of the touches has an origin point that is outside the display area and moves to a position on the display area of the touch-sensitive display 118. Thus, two fingers may be utilized for meta-navigation touch gestures. Further, multi-touch meta-navigation touch gestures may be distinguished from single touch meta-navigation touch gestures and may provide additional or further functionality.

The accelerometer 136 is coupled to the processor 102 and is controlled by one or a combination of a monitoring circuit (not shown) and operating software. The accelerometer 136 has a sensing element which senses acceleration from motion and/or gravity. The accelerometer 136 generates and outputs an electrical signal representative of the detected acceleration. Changes in orientation and movement of the portable electronic device 100 result in changes in acceleration which produce corresponding changes in the electrical signal output of the accelerometer 136. The accelerometer 136 may be a three-axis accelerometer having three mutual orthogonally sensing axes. The portable electronic device 100 may include other types of motion sensors in addition to, or instead of, the accelerometer 136 in other embodiments. The other motion sensors may comprise, for example, a proximity sensor and/or gyroscope which sense, respectively the proximity and orientation of portable electronic device 100.

Changes in acceleration, proximity and orientation may be interpreted by the portable electronic device 100 as motion of the portable electronic device 100. When the changes in acceleration, proximity and orientation are within threshold tolerance(s) of regularity or predictability, when the changes in acceleration, proximity and orientation match predetermined motion criteria (e.g., stored in the memory 110), the changes may be interpreted by the portable electronic device 100 as a pattern of motion. Multiple patterns of motion may be recognized by the portable electronic device 100. By configuring the processor 102 to recognize certain motion patterns in the acceleration signal from the accelerometer 136, the processor 102 can determine whether the portable electronic device 100 has been moved in a predetermined motion sequence referred to herein as motion gestures. Motion gestures performed by the user may cause acceleration in one or more sensing axes and in one or more directions.

As will also be appreciated by persons skilled in the art, accelerometers may produce digital or analog output signals. Generally, two types of outputs are available depending on whether an analog or digital accelerometer is used: (1) an analog output requiring buffering and analog-to-digital (A/D) conversion; and (2) a digital output which is typically available in an industry standard interface such as an SPI (Serial Peripheral Interface) or 12C (Inter-Integrated Circuit) interface. When the accelerometer is analog, the memory 110 includes machine-readable instructions for calculating acceleration based on electrical output input from the accelerometer 136. The processor 102 executes the machine-readable instructions to calculate acceleration which may be used by the operating system 146 and/or applications 148.

The output of the accelerometer 136 is typically measured in terms of the gravitational acceleration constant at the Earth's surface, denoted g, which is approximately 9.81 m/s² (32.2 ft/s²) as the standard average, or in terms of units Gal (cm/s²). The accelerometer 136 may be of almost any type including, but not limited to, a capacitive, piezoelectric, piezoresistive, or gas-based accelerometer. The range of accelerometers vary up to the thousands of g's, however for portable electronic devices "low-*g*" accelerometers may be used. Example low-g accelerometers which may be used are MEMS digital accelerometers from Analog Devices, Inc. (ADI), Freescale Semiconductor, Inc. (Freescale) and STMicroelectronics N.V. of Geneva, Switzerland. Example *low-g* MEMS accelerometers are model LIS331 DL, LIS3021 DL and LIS3344AL accelerometers from STMicroelectronics N.V.

The portable electronic device 100 may also include a navigation device (not shown) such as a depressible (or clickable) joystick (e.g., a depressible optical joystick), a depressible trackball, a depressible scroll wheel, or a depressible touch-sensitive trackpad or touchpad. The portable electronic device 100 may also include a keyboard or keypad (not shown) in addition to the touch-sensitive display 118. The portable electronic device 100 may also include one or more buttons (not shown). The navigation device, keyboard or keypad, and buttons may be part of the auxiliary I/O subsystems 124. In embodiments which do not use touch inputs, the touch-sensitive display 118 may be replaced with a conventional display such as an LCD or LED display.

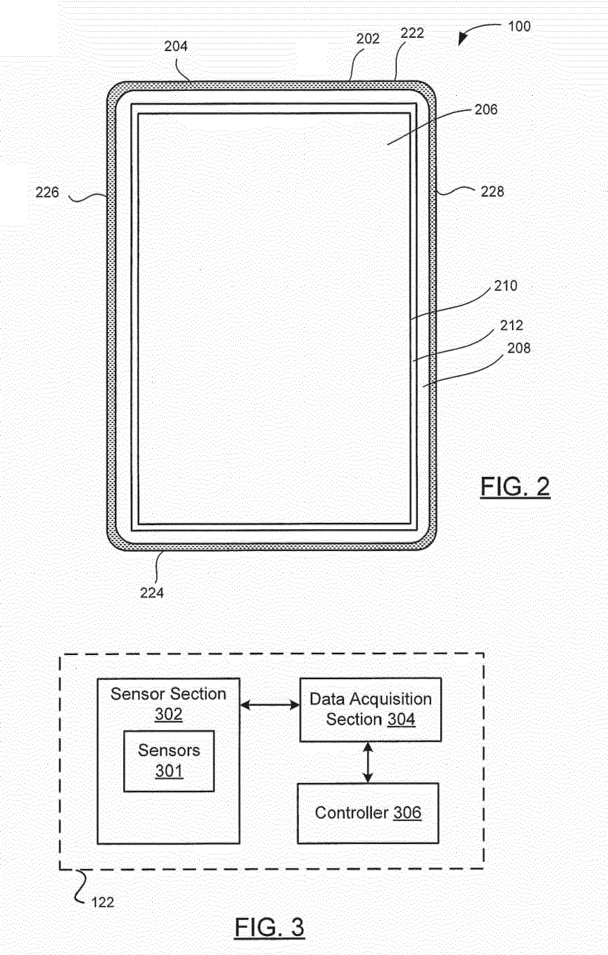

FIG. 2 shows a front view of an example of a portable electronic device suitable for carrying out the example embodiments of the present disclosure. In the shown example, the portable electronic device 100 is a table computing device but could be another type of portable electronic device in other embodiments. The portable electronic device 100 includes a substantially rigid and incompressible housing 202 that encloses components such as shown in FIG. 1. The housing 202 may be formed of a suitable plastic or other suitable material which is substantially rigid and incompressible.

In the shown example, the housing 202 is elongate having a length greater than its width. The housing 202 is configured to be held by a user with one or two hands in a portrait orientation while the portable electronic device 100 is in use, or with two hands in a landscape orientation while the portable electronic device 100 is in use. The housing 202 has a front 204 which frames the touch-sensitive display 118. The housing 202 has a back 205 (shown in FIG. 3B) which opposes the front 204. In the embodiment shown, the front 204 defines a plane which is substantially parallel to a plane defined by the back 205. The housing 202 has four sides 222, 224, 226, 228 which connect the back 205 and the front 204. The sides include opposed top and bottom sides which are designated by references 222, 224 respectively, and left and right sides extending transverse to the top and bottom sides 222, 224, designated by references 226, 228 respectively. In the embodiment shown, the housing 202 is substantially shaped as a rectangular prism formed by the front 204, back 205, and sides 222, 224, 226, 228. The top, bottom, left and right sides are relative to the position in which the device 100 is held, whereas the front and back are not relative to the position in which the device 100 is held.

In the example of FIG. 2, the touch-sensitive display 118 is generally centered in the housing 202 such that the display area 206 of the display 112 is generally centered with respect to the front 204 of the housing 202. The non-display area 208 of the touch-sensitive overlay 114 extends around the display area 206. In the presently described embodiment, the width of the non-display area is 4 mm.

For the purpose of the present example, the touch-sensitive overlay 114 extends to cover the display area 206 and the non-display area 208. Touches on the display area 206 may be detected and, for example, may be associated with displayed selectable features. Touches on the non-display area 208 may be detected, for example, to detect a meta-navigation touch gesture. Alternatively, meta-navigation touch gestures may be determined by both the non-display area 208 and the display area 206. The density of touch sensors may differ from the display area 206 to the non-display area 208. For example, the density of nodes in a mutual capacitive touch-sensitive display, or density of locations at which electrodes of one layer cross over electrodes of another layer, may differ between the display area 206 and the non-display area 208.

Touch gestures received on the touch-sensitive display 118 may be analyzed based on the attributes to discriminate between meta-navigation touch gestures and other touches, or non-meta navigation touch gestures. Meta-navigation touch gestures may be identified when the touch gesture crosses over a boundary near a periphery of the display 112, such as a boundary 210 between the display area 206 and the non-display area 208. In the example of FIG. 2, the origin point of a meta-navigation touch gesture on the touch-sensitive display 118 may be determined utilizing the area of the touch-sensitive overlay 114 that covers the non-display area 208.

A buffer region 212 or band that extends around the boundary 210 between the display area 206 and the non-display area 208 may be utilized such that a meta-navigation touch gesture is identified when a touch has an origin point outside the boundary 210 and the buffer region 212 and crosses through the buffer region 212 and over the boundary 210 to a point inside the boundary 210 (i.e., in the display area 206). Although illustrated in FIG. 2, the buffer region 212 may not be visible. Instead, the buffer region 212 may be a region around the boundary 210 that extends a width that is equivalent to a predetermined number of pixels, for example. Alternatively, the boundary 210 may extend a predetermined number of touch sensors or may extend a predetermined distance from the display area 206. The boundary 210 may be a touch-sensitive region or may be a region in which touches are not detected.

Touch gestures that have an origin point in the buffer region 212, for example, may be identified as non-meta navigation touch gestures. Optionally, data from such touch gestures may be utilized by an application as a non-meta navigation touch gesture. Alternatively, data from such touch gestures may be discarded such that touches that have an origin point on the buffer region 212 are not utilized as input at the portable electronic device 100.

Referring to FIG. 3, the gesture detection subsystem 122 will be described in more detail. The gesture detection subsystem 122 includes a sensor section 302 including a number of sensors 301, a data acquisition section 304, and a controller 306. The sensor section 302 may include one or any combination of force sensors, bend sensors, pressure sensors, rotation sensors, magnetic sensors or other suitable sensors capable of sensing distortion of the portable electronic device 100, such as distortion of the housing 202. A distortion is a physical deformation caused by physical interaction with the portable electronic device 100 caused by gestures performed by a user of the portable electronic device 100. The physical deformation causes a change in the physical state of the portable electronic device 100 from a preexisting state, such as a neutral state, to a new and different state. The change is typically only temporary. The physical deformation may be completely reversible, incompletely reversible (i.e., partially reversible) or completely irreversible. Completely reversible deformations are preferred because such deformations do not damage the portable electronic device 100. The distortion is typically caused by micro-deflections in the housing 202 or possibly other components of the portable electronic device 100, which are not visible to user. The sensors of the sensor section 302 are devices which detects physical deformation caused by the user's gestures and capturing such physical deformations as sensor data.

The force sensors may be a force-sensitive resistor, strain gauge, piezoelectric or piezoresistive device or other suitable device. Force as utilized throughout the specification refers to force measurements, estimates, and/or calculations, such as pressure, deformation, stress, strain, force density, force-area relationships, thrust, torque, and other effects that include force or related quantities.

A calibration routine may be provided for the sensors 301 to adjust the zero point (e.g., when no force applied) if it drifts over time. For example, if the sensors 301 sense a relatively consistent and continuous torque, the portable electronic device 100 may be placed on a flat surface. The flatness of the surface may be checked with accelerometer 136. The reading of the sensors 301 may be calibrated to the zero point in this position.

The sensors in the sensor section 302 may be analog or digital sensors, or a combination thereof. The data acquisition section 304 acquires sensory data from the sensor section 302, digitalizes analog sensory data acquired from the sensor section 302 as required, and provides digital sensory data to the controller 306.

The controller 306 may be configured to perform at least some of the functions discussed below with reference to the gesture interpreter 160, command interpreter 162, or both. The controller 306 may be a separate controller or may be the main processor 102. For example, the processor 102 may be a general-purpose microprocessor which is used for controlling overall device operations whereas the controller 306 may be a task-specific microprocessor which is used for performing functions related to function(s) of the gesture interpreter 160 and/or command interpreter 162. The controller 306 may be configured to perform any or all of the processor functions related to the gesture detection subsystem 122 and the functions of the gesture interpreter 160 and/or command interpreter 162. When a separate controller 306 is provided, the functions of the gesture interpreter 160 and/or command interpreter 162 may be split between the controller 306 and the processor 102.

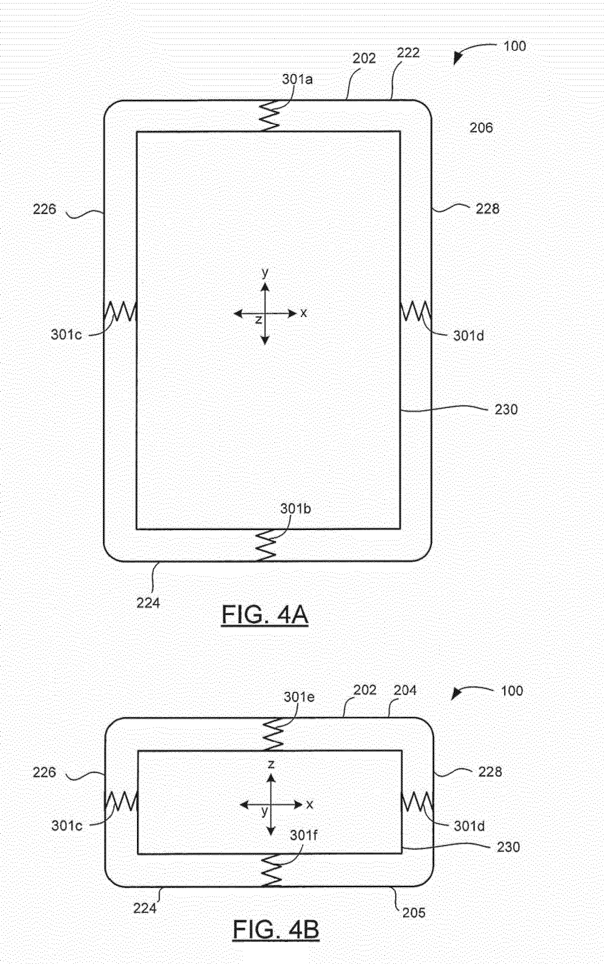

Referring to FIG. 4A and 4B, the location of sensors 301 of the sensor section 302 in accordance with an example embodiment will be described. The sensors 301, indicated individually as 301 a, 301 b, 301 c, 301 d, 301 e and 301 f, are disposed in suitable locations between the front 204, back 205, and sides 222, 224, 226, 228 and internal component(s) of the portable electronic device 100, such as a frame 230 which provides support for device components, to detect forces imparted on the housing 202. Six sensors 301 , arranged as three pairs, are provided in the embodiment shown in FIG. 4A and 4B. A first pair of sensors 301a, 301b is used to sense forces applied to the top 222 and bottom 224 of the housing 202. A second pair of sensors 301 c, 301 d is used to sense forces applied to the left 226 and right 228 of the housing 202. A third pair of sensors 301e, 301f is used to sense forces applied to the front 204 and back 205 of the housing 202.

The first sensor pair 301a, 301b and third sensor pair 301e, 301f may be used to sense force gestures applied to the housing 202 when held by a user with two hands in a portrait orientation, whereas the second sensor pair 301c, 301 d and third sensor pair 301 e, 301f may be used to sense force gestures applied to the housing 202 when held by a user with two hands in a landscape orientation.

A different number and/or arrangement of sensors 301 may be provided in other embodiments. For example, fewer sensor pairs may be provided in other embodiments, or the sensors 301 may not be configured as sensor pairs. A fewer number of sensors 301, i.e. less than six, may be provided in other embodiments.

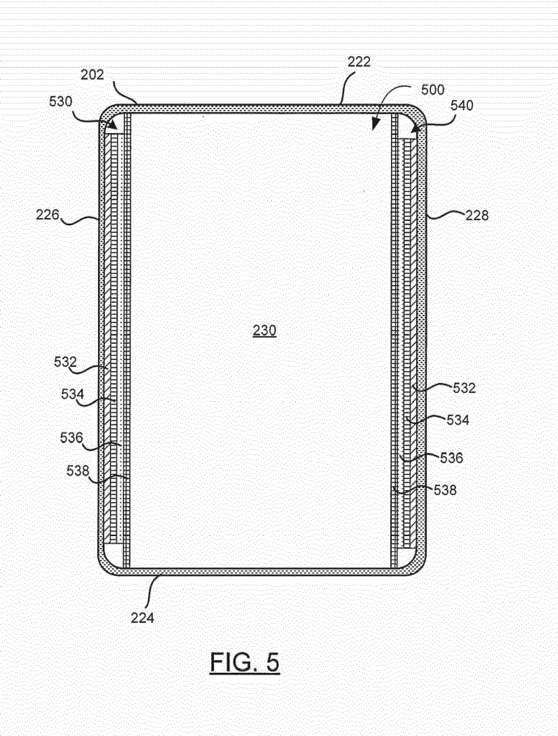

Referring now to FIG. 5, an example pressure sensor arrangement 500 for the portable electronic device will be described. The pressure sensor arrangement 500 includes a first sensing layer 530 which is located within the housing 202 along a first side of the portable electronic device 100 and a second sensing layer 540 which is located within the housing 202 along a second side of the portable electronic device 500 opposite to the first side. In the shown embodiment, the first sensing layer 530 is located along the left side 226 of the housing 202 and the second sensing layer 540 is located along the right side 228 of the housing 202.

Each of the first and second sensing layers 530, 540 includes a position sensing layer 534 and a pressure sensing layer 536. The position sensing layer 534 may be a capacitive sensor in some embodiments. A capacitive sensor is a sensor which is capable of detecting position based on capacitive coupling effects. In other embodiments, the position sensing layer 534 may be a resistive sensor. A resistive sensor is a sensor which determines position based on resistance principles.

The position sensing layer 534 extends longitudinally along the inside of the housing 202. The position sensing layer 534 has a sensing side which extends along at least a portion of the length of the side of the housing 202. The position sensing layer 534 may extend along the complete length of the side of the housing 202. In other embodiments, the position sensing layer 534 may extend only along a portion of the side of the housing 202. For example, in some embodiments, the position sensing layer 534 may extend along approximately one-half or approximately two-thirds of the entire side.

The position sensing layers 534 of the first and second sensing layers 530, 540 are able to sense touches and determine a location at which a touch occurred on the external surface of the housing 202 opposite to the position sensing layers 534. The length of the position sensing layers 534 of the first and second sensing layers 530, 540 generally determines an area on the left and right sides of the housing 202 on which touches can be sensed.

The position sensing layers 534 of the first and second sensing layers 530, 540 are coupled to the controller 306 and provide positions input in the form of location data to the controller 306. Each position input identifies a location of a touch along a respective side of the housing 202, i.e. the left side 226 or right side 228.

The pressure sensing layers 536 are pressure sensors which measure pressure applied to left and right side of the housing 202 opposite to the pressure sensing layers 536. The length of the pressure sensing layers 536 of the first and second sensing layers 530, 540 generally determines an area on the left and right sides of the housing 202 on which pressure can be sensed. Typically, the position sensing layers 534 and pressure sensing layers 536 are the same size in the example shown in FIG. 5. In some examples, position sensing layer 534 may be bonded to the pressure sensing layer 536.

The first and second sensing layers 530, 540 may include a support 538 to resist pressure applied by the user during force gestures. The support may be a rigid wall which acts as a back stop for the pressure sensing layer 536. The support 538 may be provided by internal component(s) of the portable electronic device 100, such as the frame 230, which provides support for device components such as the pressure sensing layer 536.

The pressure sensing layers 536 of the first and second sensing layers 530, 540 are coupled to the controller 306 and provide pressure inputs to the controller 306. Pressure inputs may be caused for example, by applying pressure to the left or right side of the housing 202. The pressure causes the respective side to distort/deflect from a neutral state to an actuated state. Distortion of the housing 202 causes the respective side(s) to slightly stretch, compress, bend, twist and/or fold from the neutral position. The housing 202 is substantially rigid and incompressible so the amount of distortion is relatively small and visually imperceptible to the user. The pressure sensing layers 536 may be located very close to the inner surface of the left and right side of the housing 202 so that the amount of distortion which engages the pressure sensing layer 536 is negligible.

In at least some examples, the position sensing layers 534 are located between the housing 202 and the pressure sensing layers 536 to assist in touches being sensed by the position sensing layers 534. In some examples, a conductive layer 532 located between the side of the housing 202 and the respective position sensing layer 534. The conductive layer 532 is comprised of a conductive material which facilitates touch detection at the position sensing layer 534. The conductive layer 532 may be, for example, a silver doped substrate.

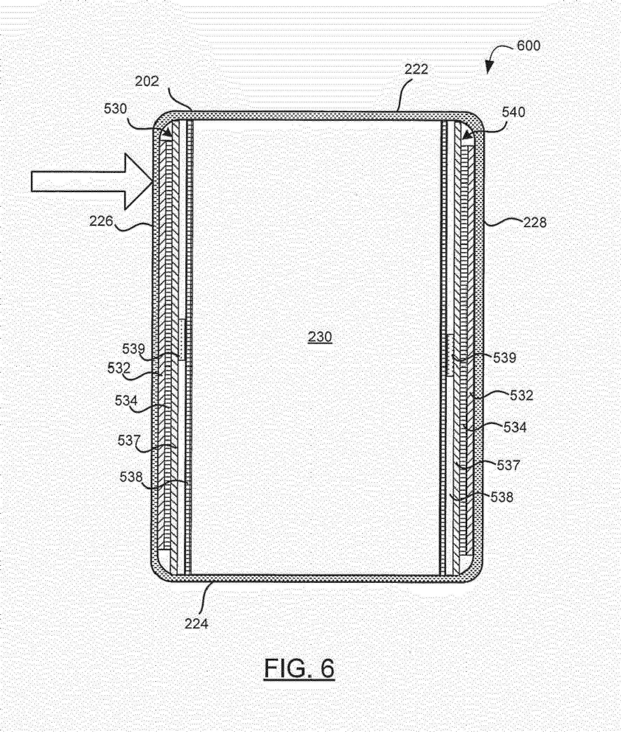

Referring now to FIG. 6, another example pressure sensor arrangement 600 for the portable electronic device will be described. The pressure sensor arrangement 600 is similar to the pressure sensor arrangement 500 except that the pressure sensors are point sensors rather than strip sensors.

The first and second sensing layers 530, 540 of the pressure sensor arrangement 600 each include point pressure sensors 539. The pressure sensors 539 have a small sensing area relative to the sensing area of the corresponding strip sensors shown in FIG 5. The sensing area of the point pressure sensors 539 is smaller than the sensing area of the position sensing layer.

The first and second sensing layers 530, 540 of the pressure sensor arrangement 600 may include pressure distribution strips 537 to expand the sensing area which point pressure sensors 539 are configured to sense. The pressure distribution strips 537 are elongate strips disposed between the point pressure sensors 539 and the left or right side of the housing 202. The length of the pressure distribution strips 537 may correspond to the length of the position sensing layers 534 or may correspond to the length of the housing 202 (which may be the same or substantially similar to the length of the position sensing layers 534). The pressure distribution strips 537 may be fixed to the housing 202, for example, at the respective ends of the pressure distribution strips 537. The point pressure sensors 539 may be located at or near the midpoint of the corresponding pressure distribution strips 537 along its length as shown in FIG. 6.

Pressure applied at nearly any location along the left or right side of the housing 202 is detected by the point pressure sensors 539. When pressure is applied at a location on the left or right side of the housing 202 but away from the point pressure sensors 539, the pressure is transferred to the corresponding pressure distribution strip 537 which, in turn, applies pressure to the respective point pressure sensor 539. For example, when pressure is applied at the location indicated by the arrow in FIG. 6, the pressure distribution strip 537 applies pressure to the point pressure sensor 539 on the left side of the housing 202.

In yet other embodiments, the position sensing layers 534 may be omitted such only that pressure data is provided by the pressure sensing layers 536 or point pressure sensors 539 of the first and second sensing layers 530, 540. Location data, provided by position sensing layers 534 in the above-described embodiments, is not available in such alternative embodiments. However, pressure data may still be associated with a respective side of the housing 202 during force gesture recognition because the location of the each of the pressure sensors, e.g., the pressure sensing layers 536 or point pressure sensors 539, with respect to the housing 202 is known to the controller.

In the shown embodiment of FIG. 5 and 6, the first and second sensing layers 530, 540 are arranged to sense forces applied to the left side and right side of the portable electronic device 100. In other embodiments, additional sensing layers may be provided about the top and bottom of the portable electronic device 100 to sense forces applied thereto. In yet other embodiments, additional sensing layers may be provided about the front and back of the portable electronic device 100 to sense forces applied thereto. In some embodiments, the additional sensing layers may be provided about the top, bottom, front and back of the portable electronic device 1 00 to sense forces applied thereto.

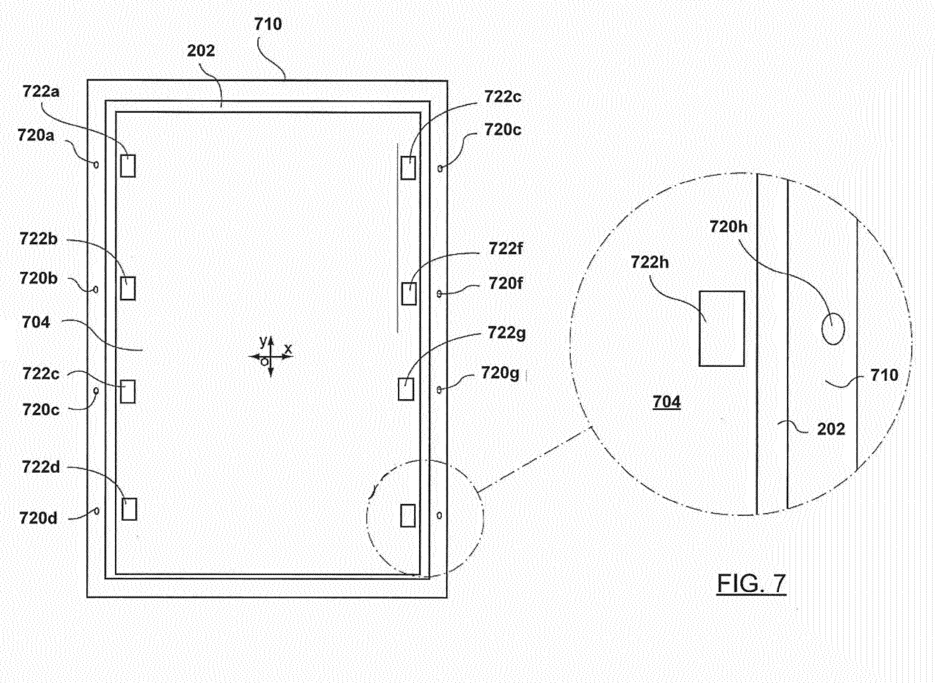

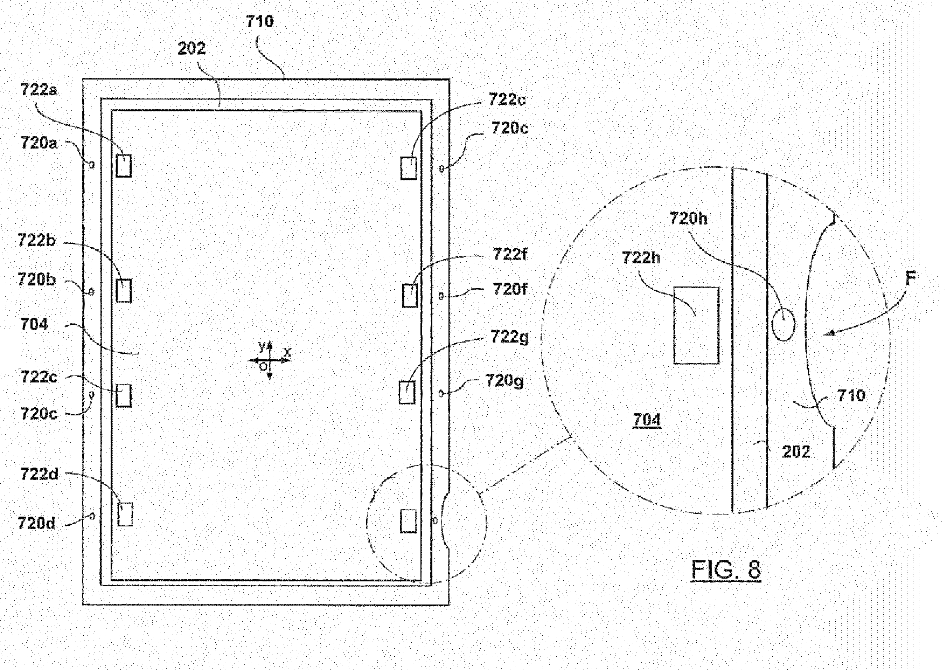

Referring now to FIGs. 7 and 8, an example magnetic sensor arrangement 700 for the portable electronic device 100 will be described. FIG. 7 is a plan sectional view of the portable electronic device 100 with a flexible skin 710 which surrounds the housing 202 in a neutral state (or reference state). FIG. 8 is a plan sectional view of the portable electronic device 1 00 with the flexible skin 71 0 in an actuated state (e.g., a compressed state in the shown example).

The magnetic sensor arrangement 700 comprises a number of magnets 720 located in the flexible skin 710 and a number of magnetic sensors 722 located within the housing 202. The magnets 720 may be any suitable type of permanent magnet such as, for example, a ceramic or ferrite magnet. The magnets 720 are located in the flexible skin 710 and generate a magnetic field. The magnetic sensors 722 are magnetometers which sense and measure the strength and/or direction of the magnetic field caused by the magnets 720. In the shown examples, the magnetic sensors 722 are Hall Effect sensors but may be semiconductor magnetoresistive elements, ferro-magnetic magnetoresistive elements or Giant magnetoresistance (GMR) devices in other embodiments.

Each Hall Effect sensor 722 comprises a sensor element (not shown) connected to a differential amplifier (not shown). The Hall Effect sensor element is made of semiconductor material, such as silicon, and has a flat rectangular shape. A Hall Effect sensor element is actuated by applying power to its longitudinal ends so that current flows longitudinally through the sensor element. The longitudinal ends of Hall Effect sensor element are respectively connected to a regulated voltage source (V) and to a ground (not shown). When current flows longitudinally through the Hall Effect sensor element, a voltage differential is created across the element at its output(s) when a magnetic flux of proper polarity passes perpendicularly through the plane of the Hall Effect sensor element. The magnitude of the voltage created is proportional to the magnetic flux density of the vertical component of the field.

The differential amplifier is connected in parallel to the voltage source (V) and the ground. The differential amplifier amplifies the voltage output of the Hall Effect sensor element to produce an amplified output which is proportional to the magnetic flux density passing through the Hall Effect sensor element. The output of the differential amplifier is a signal proportional to magnetic flux density being received by the Hall Effect sensor element.

The shape, orientation and polarity of each magnet 720 and the magnetic field generated therefrom can vary from a very narrow field which can actuate only one Hall Effect sensor 722 at a time to a wide field which can actuate a number of Hall Effect sensors 722 simultaneously. Each Hall Effect sensor 722 may be paired with a particular magnet or magnets 720 by appropriate selection of the shape, orientation and/or polarity of the particular magnet 720. This allows a particular Hall Effect sensor 722 to sense the proximity of a particular magnet 720 in the group of magnets 720. The position of the particular magnet 720 can be determined, for example, using the processor 702 from the voltage output of the paired Hall Effect sensor 722.

The flexible skin 710 fits substantially snug against the housing 202. The flexible skin 710 may be constructed from any suitable material including, but not limited to, a suitable urethane, neoprene, silicone rubber or other suitable flexible material. The flexible skin 710 may be permanently affixed to the housing 202 using a suitable adhesive or other suitable fastening means, or may be removable since the magnets 720 carried by the flexible skin 710 are passive elements. This permits a variety of different flexible skin 710 to be used. For example, some flexible skins 710 may vary the number of magnets 720, the size of the magnet sizes and/or the location of the magnets. This allows different gestures to be recognized by different skins. When a Hall Effect sensor 722 is paired with a particular magnet 720, omission of a magnet 720 effectively disables the Hall Effect sensor 722 paired with the omitted magnet 720 and the auxiliary input associated with the Hall Effect sensor 722. Thus, the functionality of the portable electronic device 700 may be controlled by changing the flexible skin 710.

The flexible skin 710 is compliant and resiliently compressible so that it may be locally compressed/deformed from the neutral state (FIG. 7) to the actuated state (FIG. 8) in response to a compressive force (F) caused, for example, by a user squeezing the portable electronic device 700, and return from the actuated state to the neutral state (FIG. 7) when the compressive force (F) is rem oved. The magnets 720 are embedded in the flexible skin 710 so as to move in response to changes between the neutral state and the actuated state as described below.

Eight magnets 720, represented individually by references 720a, 720b...720h, are located in the flexible skin 710 at the edge of the portable electronic device 700. The magnets 720 may be exposed and visible to the user or embedded within the flexible skin 710 such that the magnets 720 are not visible to the user, depending on the embodiment. In the shown example, the magnets 720 are located in accordance with a coordinate system defined by an x-axis and y-axis of an x-y plane. The origin (O) of the x-y plane is located in the centre of the housing 202 in the shown example, but may be located elsewhere in other embodiments.

The magnets 720 are symmetrically located in the plane with respect to the origin such that an array or grid of magnets 720 is formed. Four magnets 720a, 720b, 720c and 720d are located in the left side of the flexible skin 710 at positions (-x, y2), (-x, y1), (-x, -y1), (-x, -y2). Four magnets 720e, 720f, 720g and 720h are located in the right side of the flexible skin 710 at positions (x, y2), (x, y1), (x,-y1), (x, -y2).

A different number of magnets 720 and a different location for the magnets 720 may be used in other embodiments. Similarly, a different number of Hall Effect sensors 722 may be used in other embodiments, for example, more than one Hall Effect sensor 722 may be provided for each magnet 720 in other embodiments to increase the precision with which the movement of the magnets 720 can be sensed. Thus, two or more magnets 720 may be used with a single Hall Effect sensor 722 or two or more Hall Effect sensors 722 may be used with a single magnet 720 in other embodiments. The accuracy of position sensing varies with the number of magnetic sensors 722 used to sense each magnet 720 and the number of magnets sensed by each magnetic sensor 722.

In the shown example, eight Hall Effect sensors 722 are provided so that there is a Hall Effect sensor for each of the magnets 720. The Hall Effect sensors 722 are located on the printed circuit board (PCB) 704 of the portable electronic device 700. In the shown example, the eight Hall Effect sensors 722 are symmetrically located in the same plane as the magnets 720. The Hall Effect sensors 722 are located symmetrically with respect to the origin such that an array or grid of Hall Effect sensors 722 is formed.

Four Hall Effect sensors 722a, 722b, 722c and 722d are located towards the left side of the housing 202 at positions (-x2, y2), (-x2, y1), (-x2, -y1), (-x2, -y2). Four Hall Effect sensors 722e, 722f, 722g and 722h are located towards the right side of the housing 202 at positions (x2, y2), (x2, y1), (x2, -y1), (x2, - y2).

A different number of magnets 720 and a different location for the magnets 720 may be used in other embodiments. For example, a single magnet may be used in the other embodiments.

In the shown example, the magnet 720 and Hall Effect sensor 722 in each magnet-sensor pair are horizontally offset from each other along the x-axis but aligned with respect to the x-axis. A different configuration of the magnets 720 and Hall Effect sensors 722 may be used in other embodiments.

Each Hall Effect sensor 722 is paired with a particular magnet 720 in accordance with the shape, orientation and/or polarity of the particular magnet 720. The magnet 720 and Hall Effect sensor 722 in each magnet-sensor pair are located proximate to each other. In the shown example, the first magnet 720a is paired with the first Hall Effect sensor 722a, the second magnet 720b is paired with the second Hall Effect sensor 722b, the third magnet 720c is paired with the third Hall Effect sensor 722c, and the fourth magnet 720d is paired with the fourth Hall Effect sensor 722d. Similarly, the fifth magnet 720e is paired with the fifth Hall Effect sensor 722e, the sixth magnet 722f is paired with the sixth Hall Effect sensor 722f, the seventh magnet 720g is paired with the seventh Hall Effect sensor 722g, and the eighth magnet 720h is paired with the eighth Hall Effect sensor 722h.

The Hall Effect sensors 722 are coupled to the controller 306 and provide pressure and optionally location inputs to the controller 306. Pressure inputs may be caused for example, by applying pressure to the left or right side of the flexible skin 710. The flexible skin 710 allows the portable electronic device 700 to be compressed or squeezed such that local deformation is caused in the flexible skin 710. The pressure causes the flexible skin 710 to compress from the neutral state (FIG. 7) to the actuated state (FIG. 8). Compression of the flexible skin 710 causes the magnet(s) 720 closest to the compression force (F) to move relative to the reference positions in neutral state. The movement of the magnet(s) 720 causes a change in the magnetic field sensed by the Hall Effect sensors 722. The changes in the magnetic field result in changes in the output voltages of the Hall Effect sensors 722. The output voltages represent magnetic flux density sensed by the Hall Effect sensors 722.

In the shown embodiment of FIG. 7 and 8, magnets 720 and magnetic sensors 722 are arranged to sense forces applied to the left side and right side of the portable electronic device 100. In other embodiments, additional magnets 720 and magnetic sensors 722 may be provided about the top and bottom of the portable electronic device 100 to sense forces applied thereto. In yet other embodiments, additional magnets 720 and magnetic sensors 722 may be provided about the front and back of the portable electronic device 100 to sense forces applied thereto. In some embodiments, the additional magnets 720 and magnetic sensors 722 may be provided about the top, bottom, front and back of the portable electronic device 1 00 to sense forces applied thereto.

### Gesture Recognition

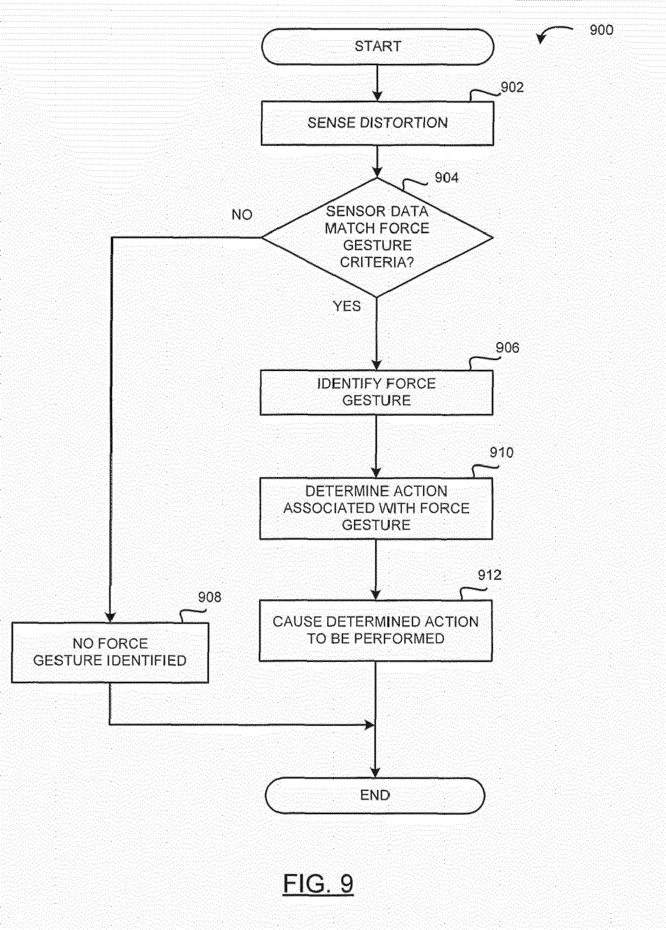

A flowchart illustrating one example embodiment of a method 900 for gesture recognition on the portable electronic device is shown in FIG. 9. The method 900 may be performed using any of the sensor arrangements described above or other suitable sensor arrangement. The method 900 may be carried out, at least in part, by software such as the gesture interpreter 160 and command interpreter 162, executed by the processor 102, controller 306 or a combination thereof. Coding of software for carrying out such a method 900 is within the scope of a person of ordinary skill in the art provided the present disclosure. The method 900 may contain additional or fewer processes than shown and/or described, and may be performed in a different order. Computer-readable code executable by at least one processor of the portable electronic device 100 to perform the method 900 may be stored in a computer-readable medium such as the memory 110.

The sensors 301 of the sensor section 302 of the gesture detection subsystem 122 sense a distortion of the portable electronic device 100, such as a distortion of the housing 202(902). The distortion changes the physical state of the portable electronic device 100 from a previous state, such as a neutral state to a new and different state. The change is typically only temporary. The sensors 301 may include one or any combination of force sensors, bend sensors, pressure sensors, rotation sensors, magnetic sensors or other suitable sensors capable of sensing distortion, such as distortion of the housing 202. The sensors 301 of the sensor section 302 are devices for detecting physical interactions such as the user's gestures and capturing such physical interactions as sensor data.

The distortion of the portable electronic device 100, in some embodiments, is a distortion of the housing 202 which may be caused about the top 222, bottom 224, left side 226, right side 228, front 204 or back 205 of the housing 202, or a combination thereof. The distortion may be caused by a user holding the portable electronic device 100 with one or two hands in the portrait or landscape orientation. In other embodiments, the distortion may be caused by compression or other deformation of a flexible skin 710 which surrounds the housing 202 rather than distortion of the housing 202.

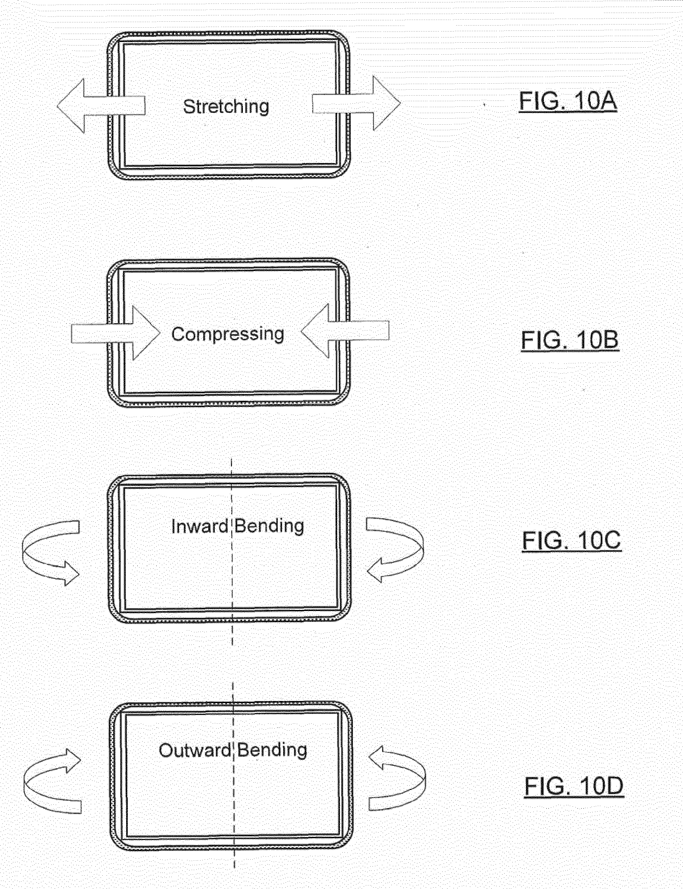

Sensor data is compared to predetermined force gesture criteria, such as predetermined force gesture patterns, to determine whether the sensor data matches predetermined force gesture criteria (904). Multiple force gesture criteria, such as force gesture patterns, may be recognized by the gesture detection subsystem 122. Referring now to FIGs. 10A to 10I, example force gestures will be described which may be recognized by the gesture detection subsystem 122. Other force gestures may be recognized by the gesture detection subsystem 122 in addition to, or instead of, the force gestures in FIGs. 10A to 10. FIGs. 10A to 10I include reference arrows which are used to show the direction of the major forces of the force gestures.

In the shown examples of FIGs. 10A to 10I, the portable electronic device 100 is shown in landscape orientation. However, similar force gestures may be applied when the portable electronic device 100 is in portrait orientation. The portable electronic device 100 has a major axis defined by its length and a minor axis defined by its width. The major axis and minor axis define a plane of the portable electronic device 100. Force gestures may be performed by force moments (torque) about the major axis, minor axis or the axis normal to the plane of the portable electronic device 100 (i.e., normal to the major and minor axes). The force gestures are shown as occurring on opposite sides of housing 202 simulating two-handed force gestures made when the portable electronic device 100 is held by a user with two hands. One-handed force gestures similar to the illustrated two-handed force gestures may be applied, for example, by performing the left-hand or right-hand component of the two-handed force gestures shown in FIGs. 10A to 10I.

FIG. 10A shows a stretching gesture which occurs when a stretching force is applied to the sides of the housing 202. FIG. 10B shows a compressing gesture which occurs when a compressing force is applied to the sides of the housing 202.

FIG. 10C shows an inward bending gesture which occurs when counter-clockwise moment forces (torque) are applied about the minor axis (shown in dotted lines) of the housing 202. FIG. 10D shows an outward bending gesture which occurs clockwise moment forces are applied about the minor axis (shown in dotted lines) of the housing 202.

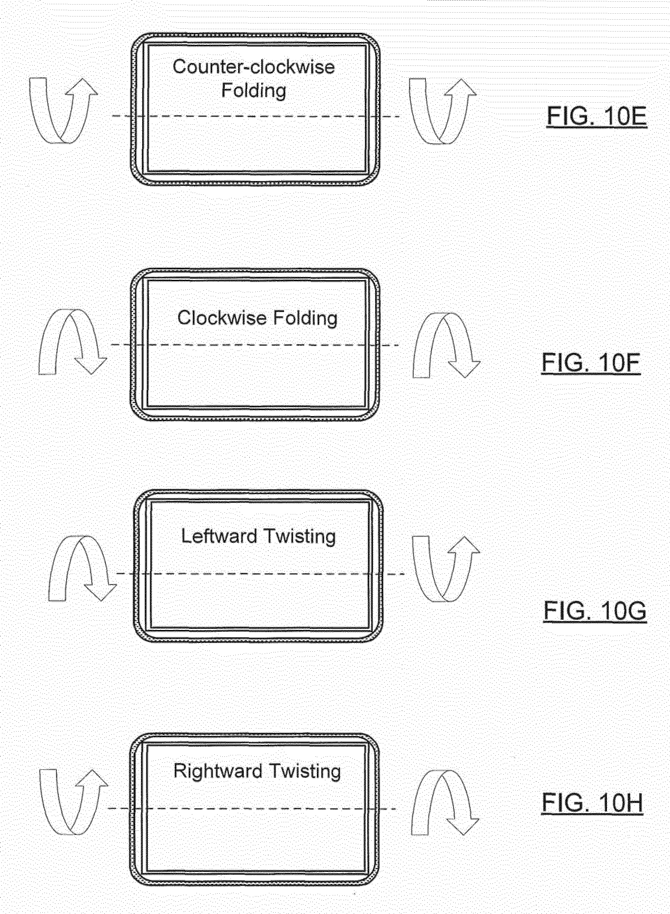

FIG. 10E shows a counter-clockwise folding gesture which occurs when counter-clockwise moment forces are applied about the major axis (shown in dotted lines) of the housing 202. FIG. 10F shows a clockwise folding gesture which occurs clockwise moment forces are applied about the major axis (shown in dotted lines) of the housing 202.

FIG. 10G shows a leftward twist gesture which occurs when a counter-clockwise moment force is applied about the major axis (shown in dotted lines) on the left side of the housing 202 and a clockwise moment force is applied about the major axis (shown in dotted lines) on the right side of the housing 202. FIG. 10H shows a rightward twist gesture which occurs when a counter-clockwise moment force is applied about the major axis (shown in dotted lines) on the left side of the housing 202 and a counter-clockwise moment forces is applied about the major axis (shown in dotted lines) on the right side of the housing 202.

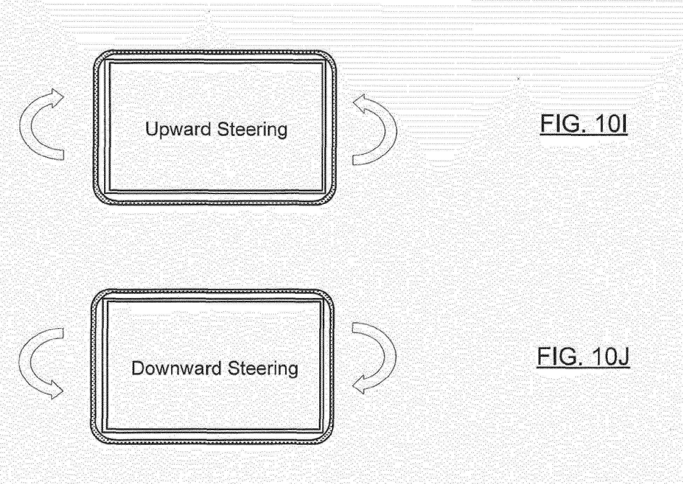

FIG. 10I shows an upward steering gesture which occurs moment forces are applied about an axis normal to the major and minor axes in the direction of the top of the housing 202. FIG. 10J shows a downward steering gesture which occurs moment forces are applied about the axis normal to the major and minor axes in the direction of the bottom of the housing 202

When the sensor data matches predetermined force gesture criteria, a force gesture associated with the sensed distortion of the housing 202 from the neutral state is identified (906). No force gesture is identified when the sensor data does not match predetermined force gesture criteria (908).

When the sensor data matches predetermined force gesture criteria and a force gesture is identified, a designated action associated with the determined force gesture is determined (910). The processor 102 may send a notification that the force gesture has occurred to the operating system 146 or active application 148 in response to identifying the force gesture. The operating system 146 or active application 148 may then determine the designated action in correspondence with the identified force gesture.

Force gestures may be combined with other input to perform actions in some embodiments. In such embodiments, performing a force gesture on its own does not cause any action to be performed; however, performing a force gesture in combination with the other input causes an action to be performed. This reduces or avoids unintentionally causing actions to be performed by the portable electronic device 100 by unintended force gestures. The other input may be any suitable input including a depression of a designated button, a designated key or the navigation device, navigation input from the navigation device, touch input from the touch-sensitive display 118, device orientation sensed by the accelerometer 136 or other orientation sensor, a motion gesture sensed by the accelerometer 136 or other motion senor, or a combination thereof. The designated action may be determined in accordance with the determined force gesture and the other input, or may be determined by the other input and the force gesture merely causes the designated action to be performed. The other input may vary between applications 148, between user interface screens displayed by the same application 148, or both. The other input may be provided before the force gesture or currently with the force gesture, depending on the embodiment.

In some examples, the other input is a touch input. The touch input may be, for example, a touch input anywhere on the touch-sensitive display 118, a selection (e.g., touching) of an onscreen item displayed on the touch-sensitive display 118, or a touch gesture. The onscreen item may be an icon which, for example, may be located at a location convenient for users to touch with a thumb or other finger and also perform the force gesture without moving his or her hands. Each type of onscreen item may be associated with one or more designated actions, or particular onscreen items may be associated with one or more designated actions. When an onscreen item is associated with one or more designated actions, the determined force gesture may be used to determine the designated action to be performed. In such examples, each of the designated actions is associated with a particular force gesture. The designated action to be performed is the action associated with a force gesture which matches the determined force gesture.

Performing a force gesture without the touch input does not cause any action to be performed. When the touch input is provided, performing a first gesture may cause a first action to be performed and performing a second gesture may cause a second action to be performed. For example, when the active application 148 is a Web browser displaying a web page, performing a force gesture without the touch input does not cause any action to be performed. When the touch input is provided before or during the sensed distortion of the force gesture, performing a first gesture (e.g., a twist gesture) may scroll the web page and performing a second gesture (e.g., a bending gesture) may cause zooming of the content of the web page to be performed.

The designated action is then performed, typically by the processor 102 (912). The designated action may comprise inputting a designated input character or performing a command. The designated action may vary depending on the active application 148 (if any) and optionally context-sensitive information. The designated action may comprise outputting a result to the display 112, such as the input character or visual representation associated with the command. The context-sensitive information may include, but is not limited to, device state, currently displayed information and/or any currently selected information when the gesture was sensed, among other factors.

### Command Recognition

### Zooming User Interface

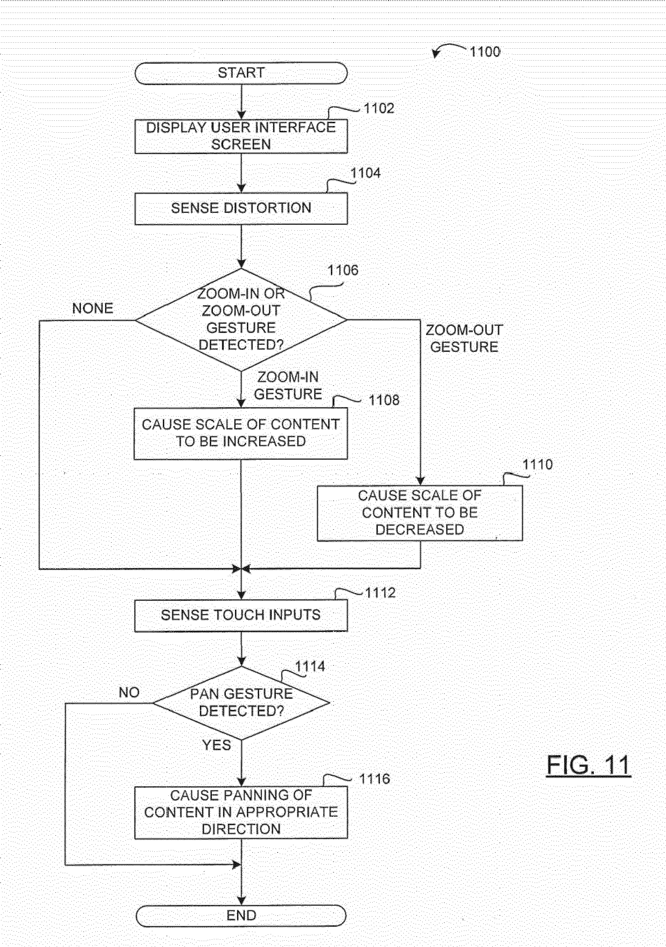

A flowchart illustrating a method 1100 of zooming a user interface on a portable electronic device 100 using force gestures in accordance with one example embodiment of the present disclosure is shown in FIG. 11. The method 1100 may be performed using any of the sensor arrangements described above or other suitable sensor arrangement. The method 1100 may be carried out, at least in part, by software such as the gesture interpreter 160 and command interpreter 162, executed by the processor 102, controller 306 or a combination thereof. Coding of software for carrying out such a method 1100 is within the scope of a person of ordinary skill in the art provided the present disclosure. The method 1100 may contain additional or fewer processes than shown and/or described, and may be performed in a different order. Computer-readable code executable by at least one processor 102 of the portable electronic device 100 to perform the method 1100 may be stored in a computer-readable medium such as the memory 110.

A user interface screen of the operating system 146 or active application 148 is displayed on the touch-sensitive display 118 (1102). The user interface screen includes a content area in which content is displayed. The content of the user interface screen has an adjustable scale. The user interface screen may also include a frame or border which surrounds and frames the perimeter of the content area. The user interface screen may be provided in a window in the GUI or may be displayed in full screen format which the user interface screen occupies the entire GUI. The user interface screen is typically displayed in response to user input. The user interface screen may be a Web browser, document viewer, mapping or navigation application or other application having a zooming user interface.

The portable electronic device 100 monitors for and senses distortion of the portable electronic device 100 (1104), for example of the housing 202 or a flexible skin 710 which surrounds the housing 202.

The portable electronic device 100 determines whether sensed distortion matches a force gesture associated with a zoom-in command or zoom-out command based on predetermined force gesture criteria (1106), such as predetermined force gesture patterns, recognized by the portable electronic device 100. In some examples, the force gesture associated with zoom-in command is a clockwise folding gesture as shown in FIG. 10F and the force gesture associated with zoom-out command is a counter-clockwise folding gesture as shown in FIG. 10E.

The portable electronic device 100 analyses the sensor data gathered by the sensor section 302, using the controller 306 and/or processor 102, in terms of factors such as amplitude/magnitude over time, frequency, or other factors to determine whether sensed distortion matches a known force gesture such as the clockwise folding gesture and counter-clockwise folding gesture.

When a clockwise folding gesture is identified, the content of the user interface screen is zoomed-in by a predetermined amount (1108). The user interface screen may have a predetermined range of scales, such as 50%, 100%, 150%, 200% and 400%, in which case the size of the content of the user interface screen is increased from a first scale (i.e., the current scale) to a next larger scale in the predetermined range of scales. The first scale may be a full scale, i.e., 100% scale in which content is displayed at the appropriate size for the current resolution of the display 112. The first scale may be a default scale of the user interface screen when initially displayed, or may be a previously adjusted scale from a prior zooming operation. Alternatively, the size of the content of the user interface screen may be increased by a predetermined amount. The predetermined amount may be a scale amount, measured in percentage (such as 10% or 25%), which is added to the current scale. For example, when the first scale is 50% and the predetermined amount is 10%, the scale of the content of the user interface screen is changed from 50% to 60%.

When a counter-clockwise folding gesture is identified, the content of the user interface screen is zoomed-out by a predetermined amount (1110). The user interface screen may have a predetermined range of scales, such as 50%, 100%, 150%, 200% and 400%, in which case the size of the content of the user interface screen is decreased from the first scale (i.e., the current scale) to a next smaller scale in the predetermined range of scales. Alternatively, the size of the content of the user interface screen may be decreased by a predetermined amount, such as 10% or 25%. The predetermined amount may be a scale amount, measured in percentage (such as 10% or 25%), which is added to the current scale. For example, when the first scale is 50% and the predetermined amount is 10%, the scale of the content of the user interface screen is changed from 50% to 40%.

The portable electronic device 100 also monitors for and senses touch inputs on the touch-sensitive display 118 (1112). Touch inputs may be used to providing other GUI navigation controls of the user interface screen, such as panning.

The portable electronic device 100 determines whether a sensed touch input is a panning touch gesture based on predetermined touch gesture criteria (1114), such as predetermined touch gesture patterns, recognized by the portable electronic device 100. The touch gestures associated with panning, known as panning touch gestures, may be swipe gestures such as a left swipe, right swipe, up swipe and down swipe in some embodiments.

When a touch input is determined to be a panning touch gesture, the content of the user interface screen is panned in a direction of the panning touch gesture (1116). The direction of the panning is determined based on the direction of the panning touch gesture. In some examples, the content of the user interface screen is panned right when the sensed touch input is determ ined to be a left swipe, the content of the user interface screen is panned left when the sensed touch input is determined to be a right swipe, the content of the user interface screen is panned down when the sensed touch input is determined to be an up swipe, and the content of the user interface screen is panned up when the sensed touch input is determined to be a down swipe.

Although the operations 1112-1116 in relation to touch gestures is shown in sequentially after the force gesture operations 1102-1110, the operations 1112-1116 may before, or currently with, the force gesture operations 1102-1110 in other embodiments.

### Navigation User Interface

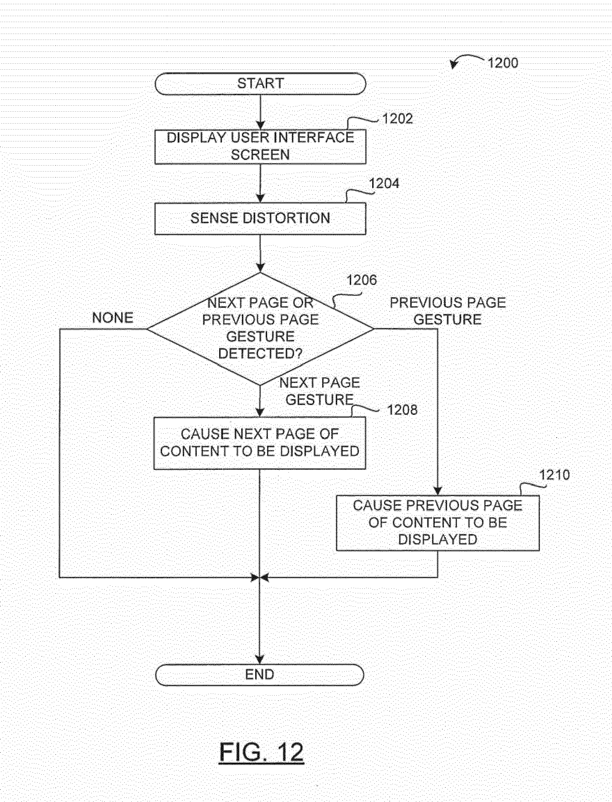

A flowchart illustrating a method 1200 of navigating a document on a portable electronic device 100 using force gestures in accordance with one example embodiment of the present disclosure is shown in FIG. 12. The method 1200 may be performed using any of the sensor arrangements described above or other suitable sensor arrangement. The method 1200 may be carried out, at least in part, by software such as the gesture interpreter 160 and command interpreter 162, executed by the processor 102, controller 306 or a combination thereof. Coding of software for carrying out such a method 1200 is within the scope of a person of ordinary skill in the art provided the present disclosure. The method 1200 may contain additional or fewer processes than shown and/or described, and may be performed in a different order. Computer-readable code executable by at least one processor 102 of the portable electronic device 100 to perform the method 1200 may be stored in a computer-readable medium such as the memory 110.

A user interface screen of a document viewer is displayed on the touch-sensitive display 118 (1202). The user interface screen includes a content area in which content is displayed. The user interface screen may also include a frame or border which surrounds and frames the perimeter of the content area. The content in the content area is a portion of a document which may be navigated between and displayed in the user interface. The frame defines content a virtual boundary which constrains the content displayed in the content area.

The document viewer may be, but is not limited to, an electronic book (eBook) reader which displays eBooks, a word processor which displays word processing documents, a slideshow player which displays slideshows, a Web browser which displays Web documents such as markup language documents (e.g., HyperText Markup Language (HTML) or extensible Markup Language (XML) documents), a PDF viewer which displays PDFs, or a messaging application which displays electronic messages. The electronic message may be, but is not limited to, an email message, Short Messages Service (SMS) text message, Multimedia Message Service (MMS) message, chat message, IM message or peer-to-peer message.

The portable electronic device 100 monitors for and senses distortion of the portable electronic device 100 (1204), for example of the housing 202 or a flexible skin 710 which surrounds the housing 202.

The portable electronic device 100 determines whether sensed distortion matches a force gesture associated with a next page command or previous page command based on predetermined force gesture criteria (1206), such as predetermined force gesture patterns, recognized by the portable electronic device 100. In some examples, the force gesture associated with next page command is a clockwise folding gesture as shown in FIG. 10F and the force gesture associated with previous page command is a counter-clockwise folding gesture as shown in FIG. 10E.

The portable electronic device 100 analyses the sensor data gathered by the sensor section 302, using the controller 306 and/or processor 102, in terms of factors such as amplitude/magnitude over time, frequency, or other factors to determine whether sensed distortion matches a known force gesture such as the clockwise folding gesture and counter-clockwise folding gesture.

When a clockwise folding gesture is identified, a next page of the document is displayed in the content area of the user interface screen (1208) when an additional page is available. The next page of the document is determined relative to the page which is currently displayed in the user interface screen. When an additional page is not available, the clockwise folding gesture may be ignored.

When a counter-clockwise folding gesture is identified, a previous page of the document is displayed in the content area of the user interface screen (1210) when an additional page is available. The previous page of the document is determined relative to the page which is currently displayed in the user interface screen. When an additional page is not available, the counter-clockwise folding gesture may be ignored.

In other embodiments, the content of the document is scrolled rather than advanced page-by-page. When a clockwise folding gesture is identified, a next portion of the document is displayed in the content area of the user interface screen when an additional page is available. The next portion of the document is determined relative to the page which is currently displayed in the user interface screen and optionally an onscreen position indicator such as a caret, cursor, focus for highlighting text, or other suitable indicator. The next portion of the document may be, for example, the next paragraph, next line of text or next lines of text (e.g., next 5 lines) of the document.

When a counter-clockwise folding gesture is identified, a previous portion of the document is displayed in the content area of the user interface screen when an additional page is available. The previous portion of the document is determined relative to the page which is currently displayed in the user interface screen and optionally an onscreen position indicator. The previous portion of the document may be, for example, the previous paragraph, previous line of text or previous lines of text (e.g., previous 5 lines) of the document.

When displaying a new portion of text document such as a new paragraph or new line of a page, the onscreen position indicator may be displayed at a default location in the new portion. For example, the onscreen position indicator may be located in or near the first word in the new portion.

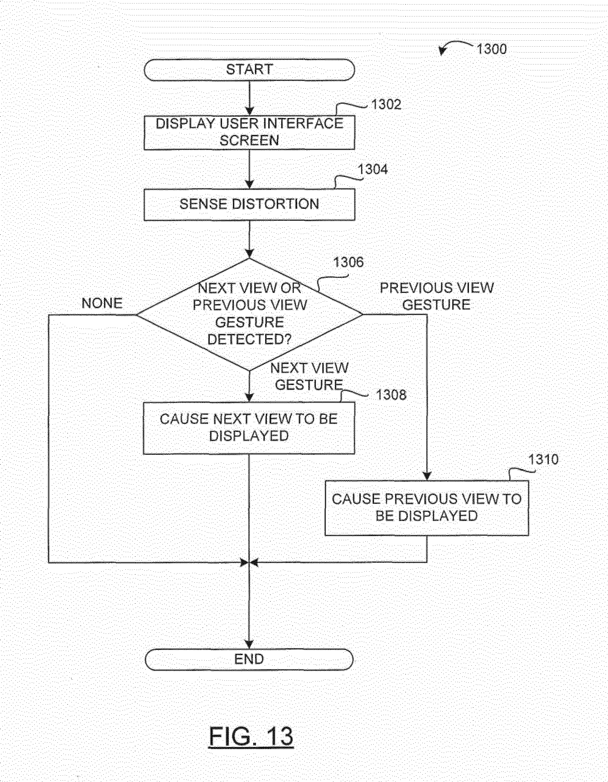

A flowchart illustrating a method 1300 of navigating a calendar on a portable electronic device 100 using force gestures in accordance with one example embodiment of the present disclosure is shown in FIG. 13. The method 1300 may be performed using any of the sensor arrangements described above or other suitable sensor arrangement. The method 1300 may be carried out, at least in part, by software such as the gesture interpreter 160 and command interpreter 162, executed by the processor 102, controller 306 or a combination thereof. Coding of software for carrying out such a method 1300 is within the scope of a person of ordinary skill in the art provided the present disclosure. The method 1300 may contain additional or fewer processes than shown and/or described, and may be performed in a different order. Computer-readable code executable by at least one processor 102 of the portable electronic device 100 to perform the method 1300 may be stored in a computer-readable medium such as the memory 110.

A user interface screen of a calendar is displayed on the touch-sensitive display 118 (1302). The user interface screen includes a content area in which content is displayed. The user interface screen may also include a frame or border which surrounds and frames the perimeter of the content area. The content in the content area is one view of several possible views may be navigated between and displayed in the user interface.

The content displayed in the content area is a particular view of the calendar. The view may be, for example, a Day View, Week View, Month View, Agenda View (also known as a Schedule View), Work View or other view. The Day View displays calendar events and time slots for a particular day in the calendar. The Week View displays calendar events and time slots for a particular week in the calendar. The Month View displays calendar events and time slots for a particular month in the calendar. The Agenda View displays calendar events and time slots for a predetermined period of time in the calendar from the current time, e.g., the next 12 hours, 24 hours, etc. The Work View displays calendar events and time slots for the current work week, e.g. Monday to Friday, in the calendar.

The portable electronic device 100 monitors for and senses distortion of the portable electronic device 100 (1304), for example of the housing 202 or a flexible skin 710 which surrounds the housing 202.

The portable electronic device 100 determines whether sensed distortion matches a force gesture associated with a next view command or previous view command based on predetermined force gesture criteria (1306), such as predetermined force gesture patterns, recognized by the portable electronic device 100. In some examples, the force gesture associated with next view command is a clockwise folding gesture as shown in FIG. 10F and the force gesture associated with previous view command is a counter-clockwise folding gesture as shown in FIG. 10E.

The portable electronic device 100 analyses the sensor data gathered by the sensor section 302, using the controller 306 and/or processor 102, in terms of factors such as amplitude/magnitude over time, frequency, or other factors to determine whether sensed distortion matches a known force gesture such as the clockwise folding gesture and counter-clockwise folding gesture.

When a clockwise folding gesture is identified, a next view is displayed in the content area of the user interface screen (1308). The available views may be navigated in a sequential order. For example, when the application is a calendar, the available views may be navigated in order of the Day View, Week View, Month View, Agenda View and Work View. A different sequential order of the views is possible. When the clockwise folding gesture is identified, the next view in sequential order of views is displayed in the content area of the user interface screen.

When a counter-clockwise folding gesture is identified, a previous view is displayed in the content area of the user interface screen (1310). The available views may be navigated in a sequential order. For example, when the application is a calendar, the available views may be navigated in order of the Day View, Week View, Month View, Agenda View and Work View. A different sequential order of the views is possible. When the clockwise folding gesture is identified, the previous view in sequential order of views is displayed in the content area of the user interface screen.

### Navigation Media

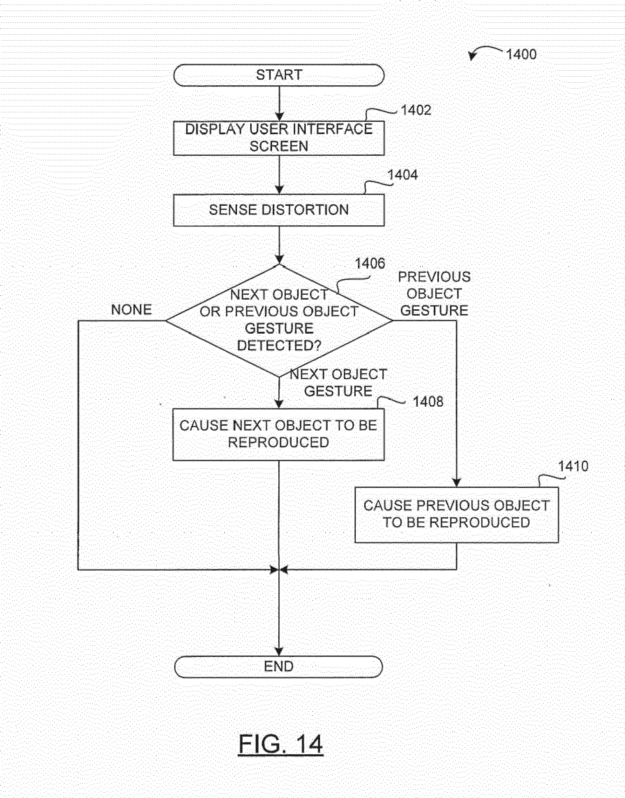

A flowchart illustrating a method 1400 of navigating media on a portable electronic device 100 using force gestures in accordance with one example embodiment of the present disclosure is shown in FIG. 14. The method 1400 may be performed using any of the sensor arrangements described above or other suitable sensor arrangement. The method 1400 may be carried out, at least in part, by software such as the gesture interpreter 160 and command interpreter 162, executed by the processor 102, controller 306 or a combination thereof. Coding of software for carrying out such a method 1400 is within the scope of a person of ordinary skill in the art provided the present disclosure. The method 1400 may contain additional or fewer processes than shown and/or described, and may be performed in a different order. Computer-readable code executable by at least one processor 102 of the portable electronic device 100 to perform the method 1400 may be stored in a computer-readable medium such as the memory 110.
A user interface screen of a media player is displayed on the touch-sensitive display 118 (1402). The user interface screen includes a content area in which content is displayed. The user interface screen may also include a frame or border which surrounds and frames the perimeter of the content area. The content in the content area is one view of several possible views may be navigated between and displayed in the user interface.

The media player which reproduces digital images (e.g., pictures), graphic objects, video objects, audio objects (e.g., audio tracks or songs) or a combination thereof. The content displayed in the content area includes an image, graphic or video, or information associated with the audio object such as track information and/or album in the form of a digital image.

The portable electronic device 100 monitors for and senses distortion of the portable electronic device 100 (1404), for example of the housing 202 or a flexible skin 710 which surrounds the housing 202.

The portable electronic device 100 determines whether sensed distortion matches a force gesture associated with a next object command or previous object command based on predetermined force gesture criteria (1406), such as predetermined force gesture patterns, recognized by the portable electronic device 100. In some examples, the force gesture associated with next object command is a clockwise folding gesture as shown in FIG. 10F and the force gesture associated with previous object command is a counter-clockwise folding gesture as shown in FIG. 10E.

The portable electronic device 100 analyses the sensor data gathered by the sensor section 302, using the controller 306 and/or processor 102, in terms of factors such as amplitude/magnitude over time, frequency, or other factors to determine whether sensed distortion matches a known force gesture such as the clockwise folding gesture and counter-clockwise folding gesture.

When a clockwise folding gesture is identified, content of a next data object of the same data type in a datastore of the media player, such as a database of data objects of the same type stored in the memory 110, is reproduced (1408). When the data object is a digital picture or graphic object, reproducing comprises displaying the digital picture or graphic defined by the digital picture or graphic object on the display 112. When the data object is a video object, reproducing comprises playing the video defined by the video object on the display 112 and speaker 128 or routing an electrical acoustic audio signal to the data port 126 for output to headphones or other external speaker. When the data object is an audio object, reproducing comprises playing the audio (e.g., song or track) defined by the audio object using the speaker 128 or routing an electrical acoustic audio signal to the data port 126 for output to headphones or other external speaker.

The next data object is determined relative to a currently selected data object, for example, in alphabetical order or chronological order from older to newer. The currently selected data object may appear as an entry in a playlist of the media player application. The currently selected data object may be indicated in a displayed playlist using highlighting or focusing the corresponding entry in the displayed playlist or other suitable method of visual indication. Highlighting or focusing an entry in the displayed playlist causes the appearance of the corresponding entry in the displayed playlist to be changed from a first visual state to a second visual state different from the first visual state. Changing the appearance of an entry in the displayed playlist, in at least some embodiments, may comprise changing a colour of a background or field of the entry in the displayed playlist, the text of the entry in the displayed playlist, or both. Alternatively, the currently selected data object may not be shown or otherwise indicated on the display 112.

The currently selected data object may be in reproduction, for example, when the currently selected data object is a digital picture or graphic object, the currently selected digital picture or graphic may be being displayed on the display 112. Similarly, when the currently selected data object is an audio object (e.g., song or track), the currently selected song or track may be being played, for example, with the speaker 128. When the currently selected data object is a video object, the currently selected video object may be being played on the display 112 and speaker 128.

When a counter-clockwise folding gesture is identified, content of a previous data object of the same data type in a datastore of the media player application, such as a database of data objects of the same type stored in the memory 110, to be reproduced (1410). When the data object is a digital picture or graphic object, reproducing comprises displaying the digital picture or graphic defined by the digital picture or graphic object on the display 112. When the data object is a video object, reproducing comprises playing the video defined by the video object on the display 112 and speaker 128 or routing an electrical acoustic audio signal to the data port 126 for output to headphones or other external speaker. When the data object is an audio object, reproducing comprises playing the audio (e.g., song/track) defined by the audio object using the speaker 128 or routing an electrical acoustic audio signal to the data port 126 for output to headphones or other external speaker.

The previous data object is determined relative to a currently selected data object, for example, in alphabetical order or chronological order from older to newer.

When a data object is not selected, the portable electronic device 1 00 does not monitor for the clockwise folding gesture or counter-clockwise folding gesture and any clockwise folding gesture or counter-clockwise folding gesture which is performed is not detected is ignored. Alternatively, the portable electronic device 100 may monitor for and detect the clockwise folding gesture and counter-clockwise folding gesture but ignores any detected gesture when a data object is not selected. Alternatively, the next or previous data object may be determined based on a default data object such as the last accessed data object of the given type in a media folder, database, or playlist, or the newest data object of the given type.

### Vehicle Simulator

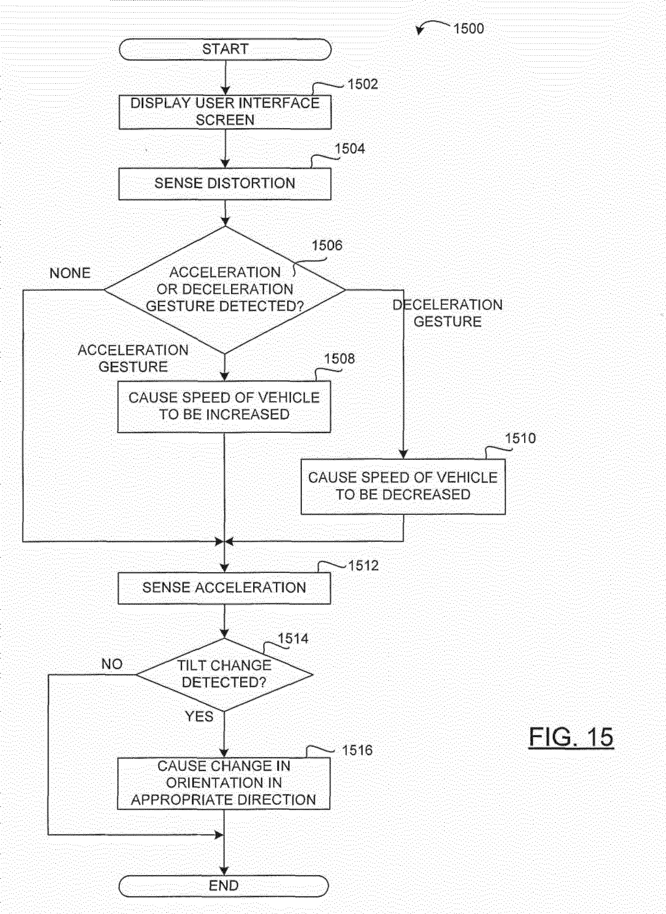

A flowchart illustrating a method 1500 of controlling a vehicle simulator on a portable electronic device 100 using force gestures in accordance with one example embodiment of the present disclosure is shown in FIG. 15. The method 1500 may be performed using any of the sensor arrangements described above or other suitable sensor arrangement. The method 1500 may be carried out, at least in part, by software such as the gesture interpreter 160 and command interpreter 162, executed by the processor 102, controller 306 or a combination thereof. Coding of software for carrying out such a method 1500 is within the scope of a person of ordinary skill in the art provided the present disclosure. The method 1500 may contain additional or fewer processes than shown and/or described, and may be performed in a different order. Computer-readable code executable by at least one processor 102 of the portable electronic device 1 00 to perform the method 1500 may be stored in a computer-readable medium such as the memory 110.

A user interface screen of a vehicle simulator such as a driving simulator (or video game) or flight simulator (or video game) is displayed on the touch-sensitive display 118 (1502). The user interface screen includes a content area in which content is displayed. The user interface screen may also include a frame or border which surrounds and frames the perimeter of the content area.

The content displayed in the content area includes a vehicle controllable by a user in an environment. The vehicle may be a motorized vehicle, such as a car, motorcycle, truck, snowmobile, all-terrain vehicle (ATV) or other land vehicle, boat, jet ski or other watercraft, a plane or other aircraft, or a shuttle or other spacecraft. In at least some embodiments, the vehicle simulator is driving game and the vehicle is a car. The vehicle simulator may use automatic or manual gear shifting, depending on the embodiment.

The portable electronic device 100 includes a game engine (not shown), for example in memory 110, which includes a rendering engine ("renderer") for 2D or 3D graphics. The game engine may also include a physics engine, sound, scripting, animation and artificial intelligence among other components. The game engine renders the vehicle simulator using inputs received by the portable electronic device 100 in accordance with rules of the vehicle simulator.

The video game is rendered suiting a suitable computer graphics and displayed on the touch-sensitive display 118. The video game may be rendered using 2D computer graphics or 3D computer graphics. 2D computer graphics are generated mostly from two-dimensional models, such as 2D geometric models, text, and digital images, and by techniques specific to two-dimensional models. 3D computer graphics use a three-dimensional representation of geometric data for the purposes of performing calculations and rendering 2D images.

2D computer graphics may be, but is not limited to, a form of 3D projection which uses graphical projections and techniques to simulate three-dimensionality, typically by using a form parallel projection wherein the point of view is from a fixed perspective while also revealing multiple facets of objects. 3D projection is sometimes referred to as 2.5D, ¾ perspective and pseudo-3D. Examples of graphical projection techniques used in of 3D projection include oblique projection, orthographic projection, billboarding, parallax scrolling, skyboxes and skydom es.

3D graphics may be, but is not limited to, fixed 3D, first-person perspective or third-person perspective.

The portable electronic device 100 monitors for and senses distortion of the portable electronic device 100 (1504), for example of the housing 202 or a flexible skin 710 which surrounds the housing 202.

The portable electronic device 100 determines whether sensed distortion matches a force gesture associated with an acceleration command or deceleration command based on predetermined force gesture criteria (1506), such as predetermined force gesture patterns, recognized by the portable electronic device 100. In some examples, the force gesture associated with acceleration command is a clockwise folding gesture as shown in FIG. 10F and the force gesture associated with deceleration command is a counter-clockwise folding gesture as shown in FIG. 10E.

The portable electronic device 100 analyses the sensor data gathered by the sensor section 302, using the controller 306 and/or processor 102, in terms of factors such as amplitude/magnitude over time, frequency, or other factors to determine whether sensed distortion matches a known force gesture such as the clockwise folding gesture and counter-clockwise folding gesture.

When a clockwise folding gesture is identified, the speed of the vehicle is increased (1508). This comprises increasing a value of a speed parameter of the vehicle simulator, rendering a new scene including the vehicle and the environment using the new value of the speed parameter, and displaying the rendered new scene on the touch-sensitive display 118. In some embodiments, the speed may be increased by an amount proportional to a magnitude of the force gesture.

When a counter-clockwise folding gesture is identified, the speed of the vehicle is decreased (1510). This comprises decreasing a value of a speed parameter of the vehicle simulator, rendering a new scene including the vehicle and the environment using the new value of the speed parameter, and displaying the rendered new scene on the touch-sensitive display 118. In some embodiments, the speed may be decreased by an amount proportional to a magnitude of the force gesture.

When manual gear shifting is used, a clockwise folding gesture having a duration less than a threshold duration may be used to up-shift the vehicle whereas a clockwise folding gesture having a duration which is greater than or equal to the threshold duration may be used to increase the speed of the vehicle. Similarly, a counter-clockwise folding gesture having a duration less than a threshold duration may be used to down-shift the vehicle whereas a counter-clockwise folding gesture having a duration which is greater than or equal to the threshold duration may be used to decrease the speed of the vehicle. Manual shifting causes a gear parameter of the vehicle simulator to be changed.

In other embodiments, a distinct force gesture may be used for manual shifting. For example, an outward bending gesture as shown in FIG. 10D may be used to up-shift whereas an outward bending gesture as shown in FIG. 10C may be used to down-shift.

The portable electronic device 100 also monitors for and senses acceleration of the portable electronic device 100 (1512).

The portable electronic device 100 determines whether the sensed acceleration matches a notable change in orientation of the portable electronic device 100 (1514). A notable change in orientation may be a change in orientation which exceeds a threshold change in orientation in one or more directions, such as a change in the tilt of the portable electronic device 100 which exceeds a threshold change in tilt.

When sensed acceleration matches a notable change in orientation of the portable electronic, the orientation of the vehicle is changed in the appropriate direction (1516). This comprises changing a value of one or more orientation parameters in accordance with a direction of the notable change in orientation, rendering a new scene including the vehicle and the environment using the changed value of the one or more orientation parameters, and displaying the rendered new scene on the touch-sensitive display 118.

Although the operations 1512-1516 in relation to touch gestures is shown in sequentially after the force gesture operations 1502-1510, the operations 1512-1516 may before, or currently with, the force gesture operations 1502-1510 in other embodiments.

### Device Security

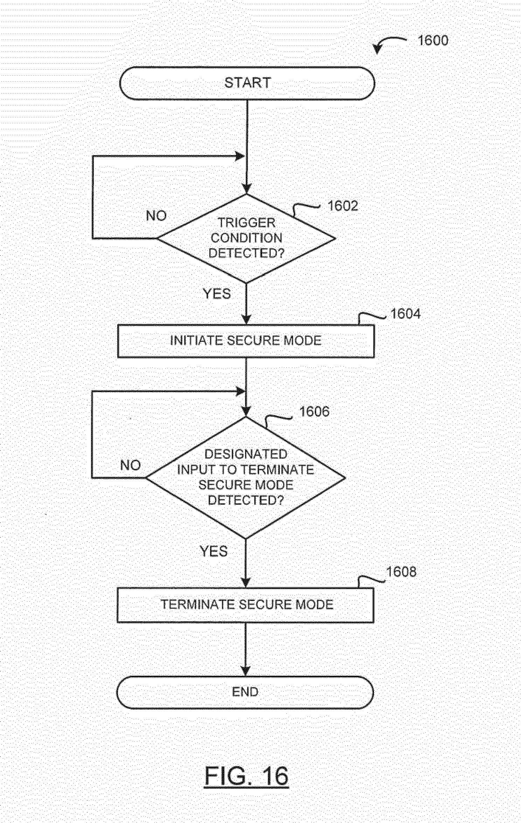

A flowchart illustrating a method 1600 of providing security on a portable electronic device 100 using force gestures in accordance with one example embodiment of the present disclosure is shown in FIG. 16. The method 1600 may be performed using any of the sensor arrangements described above or other suitable sensor arrangement. The method 1600 may be carried out, at least in part, by software such as the gesture interpreter 160, command interpreter 162 and security module 164 executed by the processor 102, controller 306 or a combination thereof. Coding of software for carrying out such a method 1600 is within the scope of a person of ordinary skill in the art provided the present disclosure. The method 1600 may contain additional or fewer processes than shown and/or described, and may be performed in a different order. Computer-readable code executable by at least one processor 102 of the portable electronic device 100 to perform the method 1600 may be stored in a computer-readable medium such as the memory 110.

The processor 102 monitors a trigger condition for initiating a secure mode on the portable electronic device 100 (1602). The trigger condition may be one of a number of trigger conditions. The trigger conditions may include but are not limited to a designated input, inactivity of the input devices for a threshold duration, inactivity of the communication subsystem 104 for a threshold duration, a lack of wireless network coverage for a threshold duration, a holstering or closing of the portable electronic device 1 00, or other suitable trigger condition. The designated input may be any suitable input including a depression of a designated button, a designated key or the navigation device, navigation input from the navigation device, touch input from the touch-sensitive display 118, device orientation sensed by the accelerometer 136 or other orientation sensor, a force gesture sensed by the gesture detection subsystem 122, a motion gesture sensed by the accelerometer 136 or other motion senor, or a combination thereof.

When the trigger condition is detected, a secure mode is initiated on the portable electronic device 100 (1604). When no trigger condition is detected, the processor 102 continues to monitor for the trigger condition for initiating a secure mode until the process is disabled.

The portable electronic device 100 may have several secure modes including but not limited to a standby mode and a locked mode. In the standby mode, the processor 102 is configured not to accept touch inputs received via the touch-sensitive display 118. In some examples, the designated input to initiate the standby mode is a designated force gesture or a sequence of force gestures. The sequence of gestures may comprise a number of force gestures with relative timing elements. The designated force gesture(s) may be selected such that the designated force gesture(s) are unlikely to be performed accidentally. The designated force gesture(s) may also be selected to be relatively simple and intuitive force gesture(s) to facilitate user adoption among other purposes. In some examples, the designated force gesture(s) may be a compress gesture followed by a stretch gesture. This sequence of gestures may be intuitive for some users, roughly simulating the interaction with a conventional padlock. In some examples, the designated force gesture(s) may be a rapid compress gesture followed by a rapid stretch gesture within a threshold duration of the rapid compress gesture.

In the locked mode, restrictions limiting interaction with the portable electronic device 1 00 are enforced. The restrictions placed on the portable electronic device 100 in the locked mode affect at least some of its input devices and optionally at least some of its output devices. While the restrictions placed on the portable electronic device 100 in the locked mode may vary, the restrictions typically prevent any files, messages or other information stored on the portable electronic device 100 from being viewed, prevent any email or other electronic messages from being composed or sent, and prevent phone calls from being made from the portable electronic device 100 (except, in some embodiments, selected phone calls such as 911 emergency calls which may be permitted when the portable electronic device 100 is in the locked mode). Incoming phone calls may be answered when in the portable electronic device 100 is in the locked mode in at least some embodiments. Locking of the portable electronic device 100 effectively prevents the entry or extracting of information from the portable electronic device 100 other than to enter a designated input, such as password or other input to unlock the portable electronic device 100, recognized by the security module 164. Any combination of the above-mentioned restrictions may be applied in the locked mode of different embodiments.

The locked mode may be associated with a sleep mode in which components of the portable electronic device 100 are placed in an energy saving mode to conserve power. The sleep mode may comprise disabling/deactivating the touch-sensitive display 118, or possibly the display 112 of the touch-sensitive display 118. In such embodiments, initiating a locked mode comprises deactivating the touch-sensitive display 118 or display 112 and terminating the locked mode comprises re-activating the touch-sensitive display 118 or display 112.

When the portable electronic device 100 is in the secure mode, the processor 102 monitors for designated input to terminate the secure mode (1606). When designated input to terminate the secure mode is detected, the secure mode is terminated (1608). The designated input for terminating the secure mode comprises a first force gesture or first sequence of force gestures. The secure mode is terminated when the first force gesture or first sequence of force gestures is detected.

When the secure mode is the standby mode, terminating the secure mode comprises reconfiguring the processor 102 to accept touch inputs received via the touch-sensitive display 118. The display 112 is also reactivated if it was deactivated when the standby mode was initiated in 604. The designated input to terminate the standby mode is typically much simpler than the designated input to terminate the locked mode. In some examples, the designated input to initiate the standby mode (i.e., the trigger condition) may be the same as the designated input to terminate the standby mode, which may be a designated force gesture or a sequence of force gestures as described above.

When the secure mode is the locked mode, any received input causes the display 112 to be reactivated if it was deactivated when the locked mode was initiated in 1604. A prompt for designated input to terminate the secure mode (i.e., the locked mode) is typically then displayed on the display 112. When designated input to unlock the portable electronic device 100 is not received within a threshold duration of the display of the prompt, the processor 102 continues to monitor for designated input to terminate the secure mode. Alternatively, a blank user interface screen may be displayed rather than a prompt. The designated input to terminate the locked mode is typically different than any designated input to initiate the locked mode unlike the less secure standby mode.

While a prompt may be displayed, no hints, references or directional guides are displayed to enhance security. This reduces the possibility that the force gesture passcode sequence may be guessed by others since there is visual cue or guide as to the nature of the force gestures which make up the force gesture passcode sequence, the number of force gestures in the force gesture passcode sequence, or any timing aspects of the force gesture passcode sequence. This also reduces the possibility that the force gesture passcode sequence may be observed by others, thereby compromising the passcode.

In some examples, the designated input to terminate the locked mode may be a complex sequence of force gestures. The sequence of gestures may comprise a number of force gestures with relative timing elements which act as a passcode sequence to unlock the portable electronic device 100. For example, the sequence of gestures may be 2 rapid compress gestures, followed by a slow rightward twist, which in turn is followed by an inward bend. This sequence of gestures may be intuitive for some users, roughly simulating a secret handshake. When the sequence of force gestures is detected or sensed, the restrictions on the portable electronic device 100 which were enforced in the locked mode are removed and normal operations resume.

A method for evaluating force gesture passcode sequences in accordance with one example embodiment of the present disclosure will now be described. The processor 102 tracks determined force gestures by adding a value corresponding to each identified force gesture to an input buffer (not shown) stored in RAM 108, or possibly memory 110, for subsequent use in comparison operations. The processor 102 is configured to interpret each force gesture as a distinct input value which is added to the input buffer. In some embodiments, a value may be added to the input buffer for force gestures which are detected but not identified. For example, when only a limited set of force gestures are recognized and identified by the processor 102, a corresponding value is added to the input buffer for other force gestures. The value may be a distinct input value associated with all unidentified force gestures or a random value. Alternatively, unidentified force gestures may be ignored.

Next, the processor 102 analyzes the values in the input buffer to determine if the sequence of detected force gestures matches a predetermined force gesture "passcode" sequence. The values stored in the input buffer are compared to values corresponding to the force gesture passcode sequence and if the values are the same, there is a match. If the values are not the same, there is no match.

This may occur when the input buffer is filled with distinct input values for identified force gestures but the series or sequence in the input buffer does not match the values for the predetermined force gesture passcode sequence, or when a value corresponding to an unidentified force gesture is included in the input buffer, depending on the embodiment. In both cases, there is no match and the unlock process fails.

In some embodiments, predetermined submission input is required for comparison operations to be performed. The predetermined submission input may be selection of a predetermined virtual button, activation of dedicated submission key, a predetermined key or key combination in a keyboard or button, or any other suitable input.

In other embodiments, the processor 102 may automatically perform the comparison after the number of input values recorded in input buffer reaches the same number ("N") as the input values in the force gesture passcode sequence. In yet other embodiments, a comparison is performed after each force gesture is detected such that an incorrect entry is detected at the first instance of deviation from the predetermined force gesture passcode sequence.

If a match exists, the portable electronic device 100 is unlocked and the restrictions on the portable electronic device 100 are removed and normal operations resume. Successful entry of a series of force gestures can be indicated through a message or dialog box displayed on the touch-sensitive display 118 in some embodiments. Alternatively, the portable electronic device 100 may return to the home screen of the portable electronic device 100 or return to the user interface screen which was in use when the portable electronic device 100 was locked.

If a match does not exist, the portable electronic device 100 remains locked, and the unlock process fails. In some embodiments, the processor 102 may be configured to perform a device wipe and erase all user data and/or service data stored in memory 110 and/or RAM 108 if the user enters an incorrect force gesture passcode sequence more than a threshold number of times without entering the correct force gesture passcode sequence. For example, in one possible embodiment, five failed attempts to correctly enter a force gesture passcode sequence without an intervening successful user authentication results in a device wipe.

There are numerous possible permutations of force gesture and command combinations; however, not all force gesture and command combinations are procedurally efficient to implement or intuitive for a user. The present disclosure describes a number of force gesture and command combinations which may be implemented in a relatively straightforward manner within a GUI without becoming awkward in terms of processing or user experience, and without conflicting with other gestural command inputs, touch command inputs or other command inputs. The force gesture and command combinations described herein are believed to provide a more intuitive user interface for providing the described functionality with less processing complexity than alternatives, such as menu-driven or button/key-driven alternatives.

The term "computer readable medium" as used herein means any medium which can store instructions for use by or execution by a computer or other computing device including, but not limited to, a portable computer diskette, a hard disk drive (HDD), a RAM, a ROM, an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from its spirit or essential characteristics. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

## Claims

1. A method for gesture recognition on a portable electronic device, comprising:
sensing a distortion of the portable electronic device;
determining an action associated with a sensed distortion; and
causing the determined action to be performed.

2. The method of claim 1 wherein the determining comprises:
determining a force gesture associated with the sensed distortion;
determining the action associated with the determined force gesture.

3. The method of claim 1 or claim 2 wherein the determined action is performed only when a designated input is detected before or during the sensed distortion.

4. The method of claim 3 wherein the determined action is determined in accordance with the determined force gesture and the designated input detected before or during the sensed distortion.

5. The method of claim 3 or claim 4 wherein the designated input is a touch input on a touch-sensitive display of portable electronic device.

6. The method of any one of claims 1 to 5 comprising:
displaying a user interface screen including a content area in which content is displayed;
determining whether a sensed distortion matches a first force gesture or second force gesture;
when the first force gesture is detected, causing a first change in the content of the user interface screen;
when the second force gesture is detected, causing a second change in the content of the user interface screen.

7. The method of claim 6 wherein the first force gesture causes the content of the user interface screen to be zoomed-in by a predetermined amount, and wherein the second force gesture causes the content of the user interface screen to be zoomed-out by a predetermined amount.

8. The method of claim 7 wherein the first force gesture causes the content of the user interface screen to be increased in size from a current scale to a next larger scale in a predetermined range of scales, and the second force gesture causes the content of the user interface screen to be decreased in size from the current scale to a next smaller scale in the predetermined range of scales.

9. The method of claim 7 or claim 8 wherein the first force gesture causes the content of the user interface screen to be increased in size by a predetermined amount, and the second force gesture causes the content of the user interface screen to be decreased in size by a predetermined amount.

10. The method of any one of claims 7 to 9 further comprising:
sensing touch inputs on a touch-sensitive display of the portable electronic device;
determining whether a sensed touch input is a panning touch gesture based on predetermined touch gesture criteria;
when the touch input is a panning touch gesture, panning the content of the user interface screen in a direction of the panning touch gesture.

11. The method of claim 10 wherein a left swipe, right swipe, up swipe and down swipe are each panning touch gestures, wherein the content of the user interface screen is panned right when the sensed touch input is determ ined to be a left swipe, the content of the user interface screen is panned left when the sensed touch input is determined to be a right swipe, the content of the user interface screen is panned down when the sensed touch input is determined to be an up swipe, and the content of the user interface screen is panned up when the sensed touch input is determined to be a down swipe.

12. The method of any one of claims 1 to 5 comprising:
determining whether a sensed distortion matches a first force gesture or second force gesture;
when a clockwise folding gesture is detected, reproducing content of a next data object in a datastore of a media player application;
when a counter-clockwise folding gesture is detected, reproducing content of a previous next data object in a datastore of the media player application.

13. The method of any one of claims 1 to 5 comprising:
displaying a user interface screen including a content area in which content is displayed, the content including a vehicle in an environment;
determining whether a sensed distortion matches a first force gesture or second force gesture;
when the first force gesture is detected, increasing a value of a speed parameter of the vehicle simulator, rendering a new scene including the vehicle and the environment using the new value of the speed parameter, and displaying the rendered new scene;
when the second force gesture is detected, decreasing a value of a speed parameter of the vehicle simulator, rendering a new scene including the vehicle and the environment using the new value of the speed parameter, and displaying the rendered new scene.

14. The method of claim 13 further comprising:
sensing acceleration of the portable electronic device;
determining whether sensed acceleration matches a notable change in orientation of the portable electronic device;
when sensed acceleration matches a notable change in orientation of the portable electronic device, changing a value of one or more orientation parameters in accordance with a direction of the notable change in orientation, rendering a new scene including the vehicle and the environment using the changed value of the one or more orientation parameters, and displaying the rendered new scene.

15. The method of any one of claims 1 to 5 comprising:
determining a force gesture associated with the sensed distortion;
monitoring, when the portable electronic device is in a secure mode, for a designated input for terminating the secure mode, wherein the designated input for terminating the secure mode comprises a first force gesture or first sequence of force gestures; and
terminating the secure mode when the first force gesture or first sequence of force gestures is detected.
